(19) Europäisches Patentamt
European Patent Office
Office européen des brevets

(11) **EP 1 536 957 B1**

(12) **EUROPÄISCHE PATENTSCHRIFT**

(45) Veröffentlichungstag und Bekanntmachung des Hinweises auf die Patenterteilung:
**21.03.2007 Patentblatt 2007/12**

(21) Anmeldenummer: **03775146.8**

(22) Anmeldetag: **04.09.2003**

(51) Int Cl.:
***B60G 17/015*** *(2006.01)*

(86) Internationale Anmeldenummer:
**PCT/EP2003/009838**

(87) Internationale Veröffentlichungsnummer:
**WO 2004/022365 (18.03.2004 Gazette 2004/12)**

(54) **VERFAHREN ZUR STEUERUNG UND REGELUNG VON DIGITAL ODER ANALOG EINSTELLBAREN STOSSDÄMPFERN**

METHOD FOR CONTROLLING AND ADJUSTING DIGITALLY OR ANALOGICALLY ADJUSTABLE SHOCK ABSORBERS

PROCEDE POUR COMMANDER ET REGLER DES AMORTISSEURS A REGLAGE NUMERIQUE OU ANALOGIQUE

(84) Benannte Vertragsstaaten:
**DE FR**

(30) Priorität: **05.09.2002 DE 10241012**

(43) Veröffentlichungstag der Anmeldung:
**08.06.2005 Patentblatt 2005/23**

(73) Patentinhaber: **Continental Teves AG & Co. oHG 60488 Frankfurt am Main (DE)**

(72) Erfinder:
• **ROLL, Georg**
 **63150 Heusenstamm (DE)**
• **TRÖSTER, Steffen**
 **65835 Liederbach (DE)**
• **SCHWARZ, Ralf**
 **69118 69118 (DE)**

(56) Entgegenhaltungen:
| | |
|---|---|
| **EP-A- 0 317 071** | **EP-A- 1 213 163** |
| **DE-A- 10 011 779** | **DE-A- 19 515 048** |
| **US-A- 4 555 126** | **US-A1- 2002 128 760** |
| **US-B1- 6 205 375** | **US-B1- 6 285 935** |

• **PATENT ABSTRACTS OF JAPAN vol. 008, no. 182 (M-319), 22. August 1984 (1984-08-22) & JP 59 073312 A (TOYO KOGYO KK), 25. April 1984 (1984-04-25)**

**Beschreibung**

Die Erfindung betrifft ein Verfahren und eine Vorrichtung zur Steuerung und Regelung von digital oder analog einstellbaren Stoßdämpfern, vorzugsweise in einem zweiachsigen Straßenfahrzeug, wobei die Dämpfer situationsabhängig mit einem Ansteuersignal so angesteuert werden, dass im Untersteuer- und Übersteuerfall das Fahrverhalten des Fahrzeugs verbessert wird.

Konventionelle ESP-Systeme beeinflussen die Horizontaldynamik von Fahrzeugen durch gezielten aktiven Bremsdruckaufbau an einzelnen Rädern, um so zusätzliche Giermomente um die Fahrzeughochachse aufzubauen, und das Fahrzeug bezüglich Gierrate und ggf. Schwimmwinkel auf vorgegebenen Sollwerten zu halten, die durch Fahrzeugmodellrechnungen bestimmt werden (DE 195 15 048 A1). Ein weiterer bekannter Mechanismus von ESP-Systemen liegt in der Reduzierung des vom Fahrer angeforderten Motormoments, um vorzugsweise ein starkes Untersteuern auf niedrigen Reibwerten zu unterdrücken. In beiden Fällen wird die Dynamik des Fahrzeugs teilweise erheblich reduziert, was zu einer veränderten Fahrzeugcharakteristik führt. Speziell bei dynamisch ausgelegten Fahrzeugen empfindet der Fahrer das veränderte bzw. erschwerte Handling als negativ.

Es wäre daher wünschenswert, die Horizontaldynamik eines Fahrzeugs durch eine Veränderung der Charakteristik des Vertikalverhaltens zu beeinflussen. Dies kann durch die dynamische Veränderung der Dämpfercharakteristik mittels einstellbarer Stoßdämpfer erzielt werden.

Bei der DE 198 03 370 A1 wird zur Verhinderung eines bei extremen Fahrsituationen gelegentlich vorkommenden Aufschaukeleffektes des Kraftfahrzeugaufbaus bzw. der Karosserie die Federungs- und/oder Dämpfungseinrichtung gesperrt. Darüber hinaus wird in der DE 40 19 732 A1 vorgeschlagen, bei einer definierten Querbeschleunigung die Dämpfungseinrichtung zu sperren und damit die Kurvenverlagerung der gefederten Massen abzustützen. JP-A-59073312 betrifft ein Verfahren zum Steuern von einstellbaren Stoßdämpfern beim Untersteuern eines Fahrzeugs, wobei die Stoßdämpfer in Abhängigkeit von einem Lenkwinkelsignal gesteuert werden. Das Verfahren berücksichtigt dabei die Auslegung der Fahrzeuge zum Untersteuern, so dass dann, wenn der Fall "non-steering" vorliegt, das Untersteuern des Fahrzeugs durch härtere Stoßdämpferauslegung verstärkt wird.

EP-A-1213163 verwendet ebenfalls den Lenkradwinkel zur Steuerung der Stoßdämpfer, wobei der Lenkradwinkel mit einem vorgegebenen Schwellenwert verglichen wird.

Daneben gilt die Erkenntnis, dass hart geschaltete Dämpfer an der Vorderachse zu einem Untersteuern des Fahrzeugs führen, während hart geschaltete Hinterachsdämpfer das Übersteuern des Fahrzeugs unterstützen. Diese Effekte werden durch die zur Verfügung stehende Summenseitenkraft der jeweiligen Achse erzielt. Die Summenseitenkraft verringert sich beim dynamischen Einwanken des Fahrzeugs im Falle von harter Dämpfung, während sie bei weicher Dämpfung geringfügig gegenüber dem Neutralzustand der Dämpfer erhöht wird.

Der vorliegenden Erfindung liegt daher die Aufgabe zugrunde, die Fahrdynamik eines Fahrzeugs in beliebigen Fahrmanövern zu verbessern.

Darüber hinaus besteht das Ziel des Verfahrens und der Vorrichtung nach der Erfindung darin, Strategien aufzuzeigen, die eine frühe Dämpferverstellung vorsehen, die auch hochdynamische Fahrmanöver und vor allem kritische Verbundmanöver (Spurwechsel etc.) optimal unterstützt.

Diese Aufgabe wird erfindungsgemäß dadurch die Merkmale der Ansprüche 1 und 16 gelöst.

Vorteilhafte Weiterbildungen sind in den Unteransprüchen angegeben.

Unter dem Vorliegen einer Fahrsituation mit Wankneigung oder Wanktendenz kann der Beginn eines Wankens oder die Erwartung einer zukünftigen Wankbewegung verstanden werden.

Die Fahrdynamik eines Fahrzeugs wird dabei in beliebigen Fahrmanövern verbessert, indem die Charakteristik der Dämpfer hochdynamisch in Abhängigkeit von Gierrate und Gierbeschleunigung so verstellt werden, dass das Fahrzeug möglichst einer von dem ESP-System berechneten Referenzgierrate folgt, ohne dass im Idealfall das konventionelle ESP mit Bremsen- und Motoreingriffen aktiv zu werden braucht.

Dabei wird durch die Variation der verfügbaren Summenseitenkräfte von Vorder- und Hinterachse die Fahrzeugcharakteristik dynamisch in Abhängigkeit verschiedener Fahrzustände und -situationen variiert. Daraus folgt, dass dem Fahrzeug ein tendenziell unter- oder übersteuerndes Verhalten aufgeprägt wird, das sich der mechanisch bedingten Fahrzeuggrundauslegung überlagert. In der Praxis zeigt sich, dass die Effekte einer solchen Variation nur dann vorteilhaft genutzt werden können, wenn die Dämpfersteuerung abhängig vom gefahrenen Manöver in absolut angepasster Phase zum Verlauf von Gierrate und Gierbeschleunigung erfolgt. Deshalb ist eine Integration der Dämpfersteuerung in das ESP-System sinnvoll, das bereits über geeignete Signale und Fahrzeugmodelle verfügt. In der DE 195 15 048 A1 ist die Ermittlung der Gierrate, der Referenzgierrate und der fahrdynamischen Größen sowie die ESP-Regelstrategie beschrieben.

Das Verfahren zur Steuerung und Regelung von digital oder analog einstellbaren Stoßdämpfern findet vorzugsweise in einem zweiachsigen Straßenfahrzeug Anwendung, wobei die Dämpfer situationsabhängig so angesteuert werden, dass im Untersteuerfall die Lenkfähigkeit, im Übersteuerfall die Fahrstabilität erhöht wird. Zur frühzeitigen Reaktion wird die Abweichung zwischen einer nach dem linearen Einspurmodell bestimmten Referenzgierrate (DE 195 15 048 A1) und der tatsächlich gemessenen Gierrate des Fahrzeugs sowie die Differenz der Gradienten der beiden Gierraten, also der Referenzgierbeschleunigung und tatsächlichen Gierbeschleunigung des Fahrzeugs, verwendet, um phasengenaue Umschaltzeitpunkte zu definieren, zwischen denen die Dämpfer der 4 Räder in Stufen oder kontinuierlich hart oder weich geschaltet werden. Vorteilhaft ist das Regelungskonzept Teil einer heutigen ESP-Regelstrategie, ggf. auf einem Steuergerät des ESP implementiert und nutzt die Signale des ESP-Systems (daher wird für das hier vorgestellte Konzept im Folgenden der Begriff ESP-Dämpfersteuerung verwendet).

Vorteilhafte Weiterbildungen der Erfindung sind in den Unteransprüchen angegeben.

Im Falle starker Unter- oder Übersteuersituationen können jedoch Bremsen- und Motoreingriffe der ESP-Regelung den Eingriffen der Dämpfersteuerung unverändert überlagert werden. Durch die adaptive Dämpfersteuerung wird also die Stabilitätsgrenze des Fahrzeugs in Richtung höherer Fahrdynamik verschoben.

Da die Dämpfer grundsätzlich eine endliche Einstellzeit aufweisen, sieht das vorgestellte Konzept vor, diese als Verzugszeit mit in die Regelstrategie zu integrieren, damit die angeforderte Dämpfercharakteristik jeweils zum richtigen Zeitpunkt vorliegt.

Weitere Vorteile und Einzelheiten ergeben sich aus nachfolgender Beschreibung von Ausführungsbeispielen.

Einzeln zeigen:

Fig. 1 eine einfache Grundstrategie zur Dämpfersteuerung, die in fahrdynamisch einfachen Situationen phasengenau arbeitet,

Fig. 2 eine verbesserte Grundstrategie, die zu einer phasengenaueren Dämpfersteuerung führt,

Fig. 3 eine gegenüber Fig. 2 erweiterte Strategie, die zu einer verbesserten Dämpfersteuerung vor allem bei hoher Fahrdynamik führt,

Fig. 4 eine gegenüber Fig. 3 nochmals verbesserte Strategie, die in manchen Phasen noch früher zu einer fahrzeugstabilisierenden Dämpfersteuerung führt.

Fig. 5 als beispielhafte Fahrsituation einen Spurwechsel und die nach der Strategie aus Fig. 4 jeweils angestrebte Dämpfersteuerung.

Fig. 6 das Blockbild einer beispielhaften Vorrichtung zur Realisierung der Strategie aus Fig. 4, bestehend aus einer Signalaufbereitung, einem Block zur Beurteilung der Dynamik des Fahrmanövers, einem Block zur Koordination und Überlagerung der strategie mit anderen Strategien (Beipiel: Skyhookregelung), sowie einem Block, der einen Zustandsautomaten zur Erkennung der Fahrsituation beinhaltet.

Fig. 7 eine Vorrichtung zur Berechnung der benötigten Signale.

Fig. 8 eine beispielhafte Vorrichtung zur anteilmäßigen Überlagerung verschiedener Dämpfersteuerungs-Strategien, wobei die Anforderung nach dem hier vorgestellten Konzept der Anforderung einer (hier nicht beschriebenen) Skyhook-Regelstrategie überlagert wird.

Fig. 9 eine beispielhafte Vorrichtung zur Realisierung des Blocks 'Zeitsteuerung mit Kennlinienfeld' aus Fig. 6.

Fig. 10 die Realisierung des Zustandsautomaten aus Fig. 6, der die Phasen und Fahrzustände der in Fig. 4 dargestellten Regelstrategie zur phasengenauen Dämpfersteuerung erkennt und entsprechende Steuersignale generiert.

Nachfolgend wird das Konzept der Dämpfersteuerung detailliert beschrieben.

Verwendete Signale:

Anhand von verschiedenen Signalen, die teils direkt dem ESP entnommen sind und teils durch die hier vorgestellte Vorrichtung erzeugt werden, wird das Verhalten des Fahrzeugs bewertet.

Die grundsätzliche Idee des Verfahrens besteht darin, das Fahrzeugverhalten anhand von Gierraten, aber auch deren zeitliche Ableitungen (Gradienten), also Gierbeschleunigungen zu beobachten.

Die üblicherweise in ESP-Systemen verwendete Referenzgierrate zeigt an, welche Gierrate der Fahrer aufgrund seiner Lenkaktivität erreichen möchte und unter Berücksichtigung des installierten Fahrzeug-Eigenlenkverhaltens und des vorliegenden Fahrbahnreibwerts auch physikalisch umsetzen kann, ohne dass das Fahrzeug seine Fahrstabilität verliert. Diese Referenzgierrate stellt damit einen direkten Sollwert $\dot{\psi}_{soll}$ für die ESP-Regelung dar und ist für das hier vorgestellte Konzept nicht optimal geeignet.

Die hier benötigte Referenzgierrate ist die auf dem vorgegebenen Lenkwinkel basierende Gierrate des stationären Einspurmodells, die in erster Linie den Fahrer-Lenkwunsch repräsentiert (ohne die physikalische Umsetzbarkeit zu berücksichtigen):

Berechnung:

$$\dot{\psi}_{ref} = \delta \frac{v}{l + EG * v^2}$$

mit

$\delta =$      Lenkwinkel am Rad (wird aus dem Lenkradwinkel abgeleitet),
$v =$      Fahrzeuglängsgeschwindigkeit (wird i.a. aus den Radumfangsgeschwindigkeiten geschätzt),
$l =$      Radstand
EG=      Eigenlenkgradient des Fahrzeugs

Diese Referenzgierrate $\dot{\psi}_{ref}$ zeigt an, welches Manöver der Fahrer einzuleiten gedenkt, und liegt in der Phase allgemein vor $\dot{\psi}_{soll}$ der ESP-Regelung und der tatsächlichen Gierrate $\dot{\psi}$. Anhand dieses Signals kann nun abgeschätzt werden, wie stark das Fahrzeug in der Folgezeit einwanken wird, wobei zunächst immer ein Hochreibwert von $\mu$ gleich 1 angenommen wird. Da das Referenzgierratensignal $\dot{\psi}_{ref}$ in der Phase weit vor der Fahrzeugreaktion liegt, bleibt genügend Zeit, um bei hoher Signaldynamik (eindeutiger Richtungsänderungswunsch des Fahrers) die Dämpfersteuerung rechtzeitig einzuleiten, bevor das Fahrzeug zu Wanken beginnt bzw. sein Wankverhalten deutlich ändert. Dies ist wichtig, da die Dämpfercharakteristik immer nur wirkt, wenn sich der Einfederweg an dem betreffenden Rad ändert:

$$F = D * \dot{x}$$

mit

$D =$      Dämpferkonstante (wird durch Einstellung variiert)
$x =$      Einfederweg
$\dot{x} =$      Einfedergeschwindigkeit

Als weitere ESP-Signale werden die leicht gefilterte und über Plausibilitäten abgesicherte Fahrzeuggierrate $\dot{\psi}$, die Fahrzeugquerbeschleunigung $\alpha_y$ (z.B. im Fahrzeugschwerpunkt, an der Vorderachse und/oder an der Hinterachse), der Lenkwinkel am Rad $\delta$ sowie die Fahrzeuglängsgeschwindigkeit $v$ verwendet.

Regelstrategie:

Die grundsätzliche Regelstrategie sieht vor, anhand der Differenz von tatsächlicher Gierrate $\dot{\psi}$ und der Referenzgierrate $\dot{\psi}_{ref}$ zu entscheiden, ob das Fahrzeug im betrachteten Zeitintervall bzw. im aktuellen Regelungszyklus neutral fährt oder unter- bzw. übersteuert.

Im Falle einer Geradeausfahrt, einer stationären Kurvenfahrt (Wankwinkel nahezu konstant) sowie auch bei einem neutralen Einlenkverhalten (Gierratendifferenz $\dot{\psi}_{ref} - \dot{\psi}$ klein), werden alle Dämpfer in einen neutralen Zustand versetzt, der entweder der Grundabstimmung des Fahrzeugs entspricht oder Resultat einer anderen beispielsweise komfortorientierten Regelstrategie ist (Beispiel: Skyhook-Regelung).

Bei einer Untersteuertendenz des Fahrzeugs (dadurch gekennzeichnet, dass der Betrag von $\dot{\psi}_{ref}$ größer ist als der Betrag von $\dot{\psi}$) wird die Fahrzeugcharakteristik auf 'übersteuerndes Verhalten' geschaltet, indem die Dämpfer der Vorderachse weich, die der Hinterachse hart geschaltet werden. Damit wird erreicht, dass die verfügbare Summenseitenkraft der Vorderachse leicht erhöht und die der Hinterachse leicht abgesenkt wird. Während des kurvenbedingten Einfederns baut sich also ein erhöhtes Lenkmoment auf, das von der Hinterachse schlechter abgestützt wird als im neutral geschalteten Zustand, der dem Fahrzeug das installierte Eigenlenkverhalten verleihen würde. Der physikalische Effekt dieser Maßnahme besteht darin, dass sich die Gierrate des Fahrzeugs erhöht und sich damit der Fahrervorgabe annähert.

Im Falle einer erkannten Übersteuertendenz des Fahrzeugs (dadurch gekennzeichnet, dass der Betrag von $\dot{\psi}_{ref}$ kleiner ist als der Betrag von $\dot{\psi}$) wird die Fahrzeugcharakteristik auf 'untersteuerndes Verhalten' geschaltet, indem die Dämpfer der Vorderachse hart, die der Hinterachse weich geschaltet werden. Damit wird erreicht, dass die verfügbare Summenseitenkraft der Vorderachse leicht abgesenkt und die der Hinterachse leicht erhöht wird. Während des kurvenbedingten Ein- bzw. Ausfederns verringert sich also das Lenkmoment und wird zudem von der Hinterachse besser abgestützt als im neutral geschalteten Zustand. Der physikalische Effekt dieser Maßnahme besteht darin, dass sich die Gierrate des Fahrzeugs verringert und sich damit der Fahrervorgabe annähert.

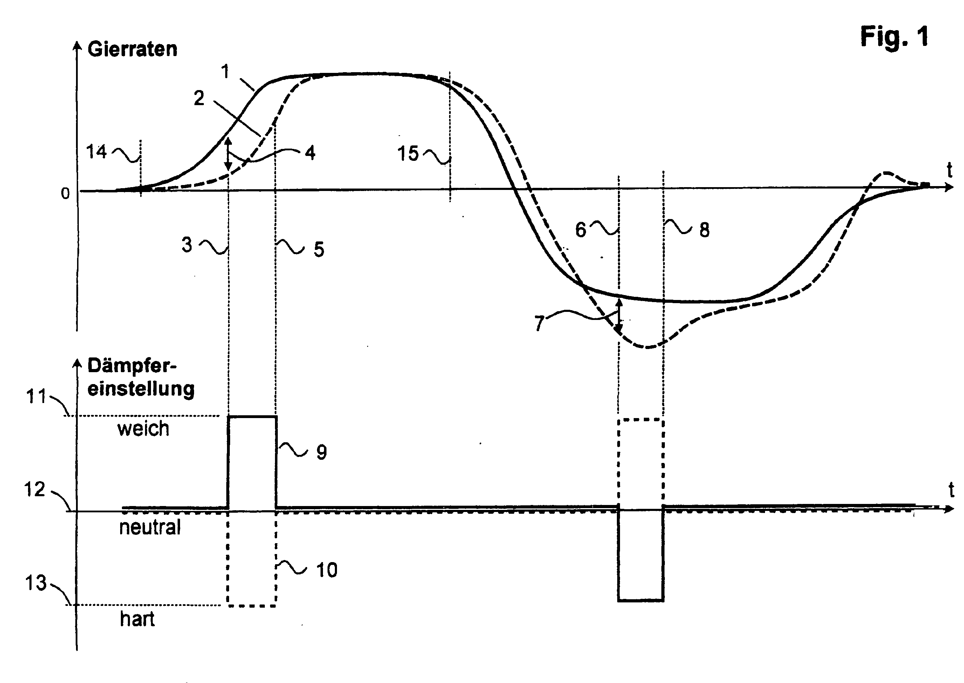

Fig. 1 stellt diesen Sachverhalt beispielhaft anhand der Abfolge von einer Links- und einer Rechtskurve im zeitlichen Ablauf dar.

Dabei ist 1 die durch den Fahrer-Lenkwinkelwunsch vorgegebene Referenzgierrate $\dot{\psi}_{ref}$, und Signal 2 repräsentiert die tatsächliche (gemessene) Fahrzeuggierrate $\dot{\psi}$.

Zuerst lenkt der Fahrer zum Zeitpunkt 14 in eine Linkskurve ein (Gierraten 1 und 2 positiv).

Zum Zeitpunkt 3 erkennt das System eine Untersteuertendenz, da die Referenzgierrate 1 um einen großen Betrag 4 über der gemessenen Gierrate 2 liegt. Um dem Fahrzeug eine verbesserte Lenkfähigkeit zu ermöglichen, wird versucht, mit Hilfe der Dämpfersteuerung ein Übersteuerverhalten zu forcieren. Dazu werden die Dämpfer der Vorderachse (Kurvenverlauf 9) zum Zeitpunkt 3 vom Zustand neutral 12 in den Zustand weich 11 umgeschaltet, während die Hinterachsdämpfer (Kurvenverlauf 10) vom Zustand neutral 12 in den Zustand hart 13 überführt werden.

Zum Zeitpunkt 5 hat sich die Gierrate 2 so dicht an die Referenzgierrate 1 angenähert, dass alle Dämpfer wieder in ihren Neutralzustand 12 geschaltet werden.

Zum Zeitpunkt 15 beginnt der Fahrer von der Links- in die Rechtskurve einzulenken (Gierraten 1 und 2 werden anschließend negativ).

Ab Zeitpunkt 6 zeigt das Fahrzeug eine Übersteuertendenz bezüglich der neuen Rechtsdrehung, die durch das deutliche (betragsmäßige) Überschwingen 7 der Gierrate 2 über die Referenzgierrate 1 im Zeitintervall 6 bis 8 gekennzeichnet ist.

Deshalb werden die Dämpfer in diesem Zeitabschnitt erneut vom neutralen Zustand 12 individuell umgeschaltet. Um das Übersteuern zu unterdrücken, wird dem Fahrzeug jetzt ein untersteuerndes Verhalten aufgezwungen, indem die Dämpfer der Vorderachse von neutral 12 auf hart 13 und die Dämpfer der Hinterachse von neutral 12 auf weich 11 umgeschaltet werden.

In der Praxis zeigt sich, dass mit dieser Strategie in vielen Fahrsituationen gute Ergebnisse erzielt werden können. Jedoch ergibt sich beim Beispiel in Fig. 1 ein wesentliches Problem. Wenn die Dämpferumschaltung zum Zeitpunkt 6 erfolgt, ist das Fahrzeug bezüglich der neuen Kurvenrichtung bereits weitgehend eingewankt, so dass die Dämpferverstellung nur einen minimalen Effekt erzielen kann.

Daher ist eine weitere Strategie vorgesehen, die eine frühere Dämpferverstellung ermöglicht, die auch hochdynamische Fahrmanöver und vor allem kritische Verbundmanöver (Spurwechsel etc.) optimal unterstützt.

Das ist nicht mehr allein über die Betrachtung der Abweichung zwischen Referenzgierrate 1 und der tatsächlichen Gierrate 2 erreichbar. Ein wichtiges Kriterium ist vielmehr der Gradient der Fahrzeuggierrate, also die Gierbeschleunigung des Fahrzeugs, speziell im Nulldurchgang der Gierrate, wenn ein Kurvenwechsel erfolgt, oder in einem Band um diesen Nullpunkt.

Weiterhin ist zu berücksichtigen, welchen Betrag die Gierrate vor ihrem Nulldurchgang hatte, wie dynamisch also die vorherige Kurve durchfahren wurde, und wie schnell das Umlenken in die neue Kurvenrichtung erfolgte. Zusätzlich ist entscheidend, wie lange die vorherige Kurvenrichtung (vor dem Nulldurchgang) durchfahren wurde. Davon hängt ab, ob sich das Fahrzeug in der vorherigen Kurvenrichtung hinreichend stabilisieren konnte. Im Falle kurzer Zeitintervalle für eine Kurvenrichtung muss von einem hochdynamischen Manöver ausgegangen werden. Während eines solchen Manövers muss nach jedem Kurvenwechsel versucht werden, dem Fahrzeug möglichst viel Stabilität zu verleihen, was durch eine frühzeitige Einstellung einer weichen Dämpfercharakteristik an den Hinterrädern zu bewirken ist.

Das weitere Verfahren zur Dämpferverstellung sieht daher eine Dämpfersteuerung vor, die - anders als die klassische ESP-Regelung - nicht nur die Regelabweichung zwischen Referenz- und Istgierrate als Kriterium für einen Eingriff betrachtet, sondern auch den Verlauf der Gierrate selbst, wobei die absoluten Maximalwerte der Gierrate sowie die Gierbeschleunigung speziell im Nulldurchgang der Gierrate herangezogen werden.

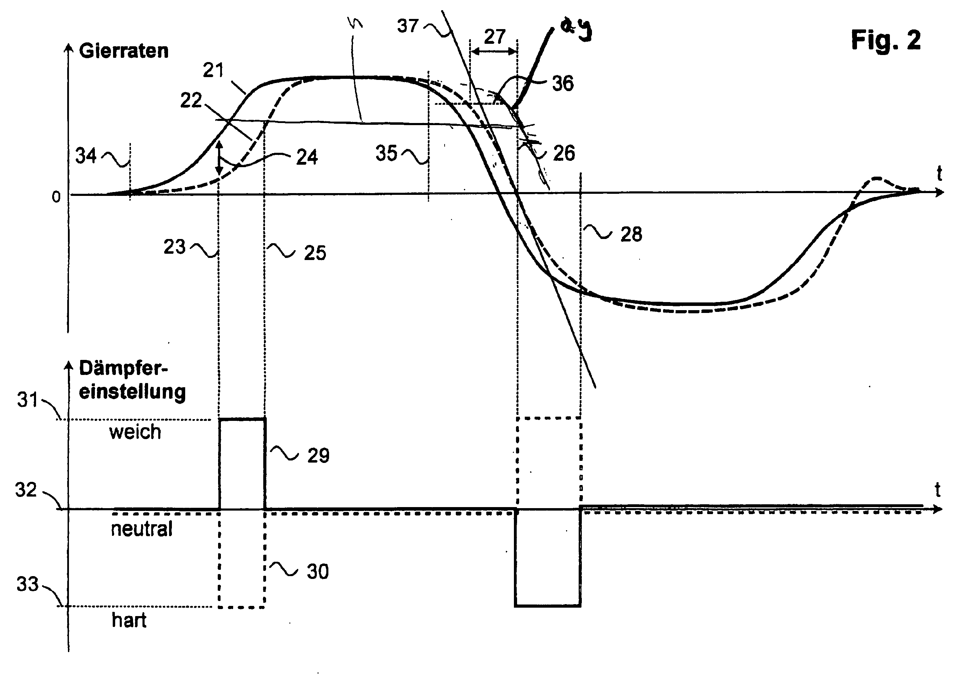

Dazu zeigt Fig. 2 beispielhaft ein ähnliches Lenkmanöver wie in Fig. 1.

Der Fahrer lenkt zum Zeitpunkt 34 in eine Linkskurve ein und beginnt zum Zeitpunkt 35 mit dem Gegenlenken in die Rechtskurve. Dabei wird unmittelbar nach dem Gegenlenken in 35 abhängig vom Gradienten 37 der Fahrzeuggierrate 22 in deren Nulldurchgang zum Zeitpunkt 26 sofort eine Dämpfercharakteristik eingestellt, die dem Fahrzeug eine Untersteuertendenz verleiht, obwohl das Fahrzeug noch nicht in der angeforderten Rechtsrichtung dreht. Demgemäss werden zum Zeitpunkt 26 die Dämpfer der Vorderachse (Verlauf 29) hart, die der Hinterachse (Verlauf 30) weich geschaltet. Diese Maßnahme führt im dargestellten Beispiel dazu, dass der eingeschwungene Kurvenzustand zum Zeitpunkt 28 erreicht wird, ohne dass die Gierrate 22 über die Referenz 21 hinausschwingt. Das Fahrzeug bleibt also durch die prophylaktische (vorbeugende) Maßnahme im Zeitpunkt 26 stabiler als mit der Maßnahme im Zeitpunkt 6 aus Fig. 1. Das heißt, dass die Wanktendenz bzw. Wankneigung des Fahrzeugs anhand der Gierbeschleunigungsgrößen zu einem Zeitpunkt ermittelt wird, bei dem ein Einwanken des Fahrzeugs noch nicht erfolgt ist.

Damit dem Fahrzeug in unkritischen Fällen nicht zuviel Dynamik beim Gegenlenken genommen wird, erfolgt der beschriebene Eingriff zum Zeitpunkt 26 nur dann, wenn der Betrag der Gierbeschleunigung im Nulldurchgang der Gierrate einen bestimmten Schwellwert überschreitet:

$$| \ddot{\psi} | > \texttt{Schwelle}$$

Für die Schwelle kann ein fester Wert, z.B. 100grd/s*s, als Erfahrungswert verwendet werden. Gemäß weiterer Ausführungsbeispielen wird diese Schwelle aber auch als Funktion der Fahrzeuggeschwindigkeit und/oder der unmittelbar zuvor (beispielsweise in einem definierten Zeitintervall $\Delta T$ 27) maximal erreichten Gierrate sowie anderer fahrdynamisch relevanter Größen z.B. nach der folgenden Beziehung berechnet:

$$\texttt{Schwelle} = \texttt{f} \; ( \; \texttt{v(Fahrzeug)}, \; \dot{\psi}_{max}(\Delta T), \; \ddot{\psi}_{max}(\Delta T), \; a_{y,max}(\Delta T) \; )$$

Dabei gilt folgender prinzipieller Zusammenhang:

Bei kleineren Fahrzeuggeschwindigkeiten wird eine höhere Schwelle gefordert; ebenso bei kleineren maximalen Gierraten im Zeitintervall 27 unmittelbar vor dem Gierraten-Nulldurchgang. Die Maßnahme zum Zeitpunkt 26 kann in anderen Ausführungsbeispielen auch ganz entfallen, wenn zum Beispiel im Zeitintervall 27 die Gierrate 22 nicht mindestens einen Schwellwert 36 betragsmäßig überschritten hatte, wobei dieser Schwellwert selbst eine Funktion der Fahrzeuggeschwindigkeit und/oder anderer fahrdynamisch relevanter Größen sein kann.

Bei extremen Lenkmanövern mit höherer Dynamik sieht das hier dargestellte Konzept vor, im Bedarfsfall die Dämpfersteuerung auch in dichter zeitlicher Abfolge zu variieren, um dem Fahrzeug in jedem Zeitintervall die optimal angepasste Eigenlenkcharakteristik zu verleihen.

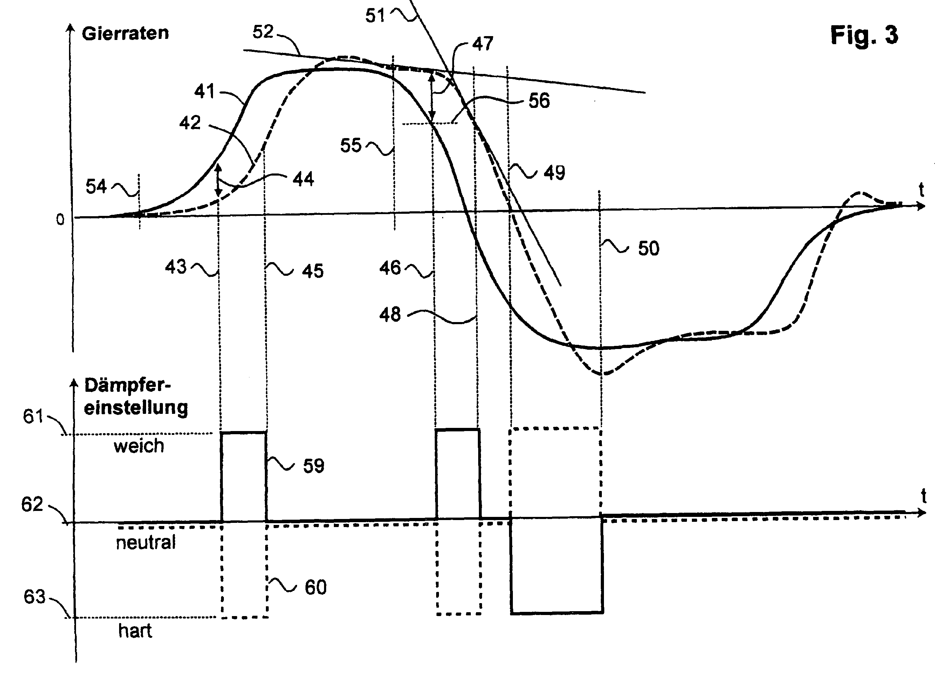

Dazu zeigt Fig. 3 erneut eine ähnliche Fahrsituation wie Fig. 1 und Fig. 2, wobei der Fahrer diesmal zum Zeitpunkt 54 sehr hart in die Linkskurve einlenkt und zum Zeitpunkt 55 ebenfalls sehr dynamisch in eine Rechtskurve gegenlenkt. Bedingt durch die Tatsache, dass sich das Fahrzeug zum Zeitpunkt 55 bzgl. der Linkskurve noch nicht stabilisiert hat, ergibt sich beim Gegenlenken in 55 ein schlechtes Folgeverhalten, was durch das Nacheilen der Fahrzeuggierrate 42 hinter der Referenzgierrate 41 angedeutet ist. Der Fahrer kann diesen Phasenverzug in der Fahrzeugreaktion als sehr gefährdend empfinden, wenn er aufgrund der Fahrsituation einen engen Kurs einhalten muss, und dann durch Vorgabe eines zu hohen Lenkwinkels in der Gegenrichtung überreagieren. In vielen Fällen führt das zu starke und zeitlich zu lange Lenken zu Fahrzeuginstabilitäten. Deshalb ist es wichtig, dem Fahrer eine möglichst direkte Fahrzeugreaktion zu vermitteln.

Nach dem hier vorgestellten Konzept der Dämpfersteuerung wird daher die Lenkfähigkeit des Fahrzeugs zum Zeitpunkt 46 erhöht, wenn die Differenz 47 zwischen der Fahrzeuggierrate 42 und der Referenzgierrate 41 eine Schwelle überschreitet. Dazu werden die Dämpfer der Vorderachse (Kurvenverlauf 61 zum Zeitpunkt 46 vom Zustand neutral 62 in den Zustand weich 61 umgeschaltet, während die Hinterachsdämpfer (Kurvenverlauf 60) vom Zustand neutral 62 in den Zustand hart 63 überführt werden. Zum Zeitpunkt 48 wird festgestellt, dass das Fahrzeug hinreichend reagiert und einen betragsmäßig hohen Gierratengradienten 51 in Richtung Rechtskurve aufgebaut hat. Daher werden zum Zeitpunkt 58 wieder alle Dämpfer in den Neutralzustand 62 überführt. Anschließend schneidet die Fahrzeuggierrate 42 zum Zeitpunkt 49 die Nulllinie, und es wird wieder die bereits in Fig. 2 dargestellte Maßnahme eingeleitet, die dem Fahrzeug wieder eine untersteuernde Charakteristik aufprägt. Damit wird selbst bei hochdynamischem Gegenlenken die Gierratenüberhöhung im Zeitpunkt 50 gut bedämpft.

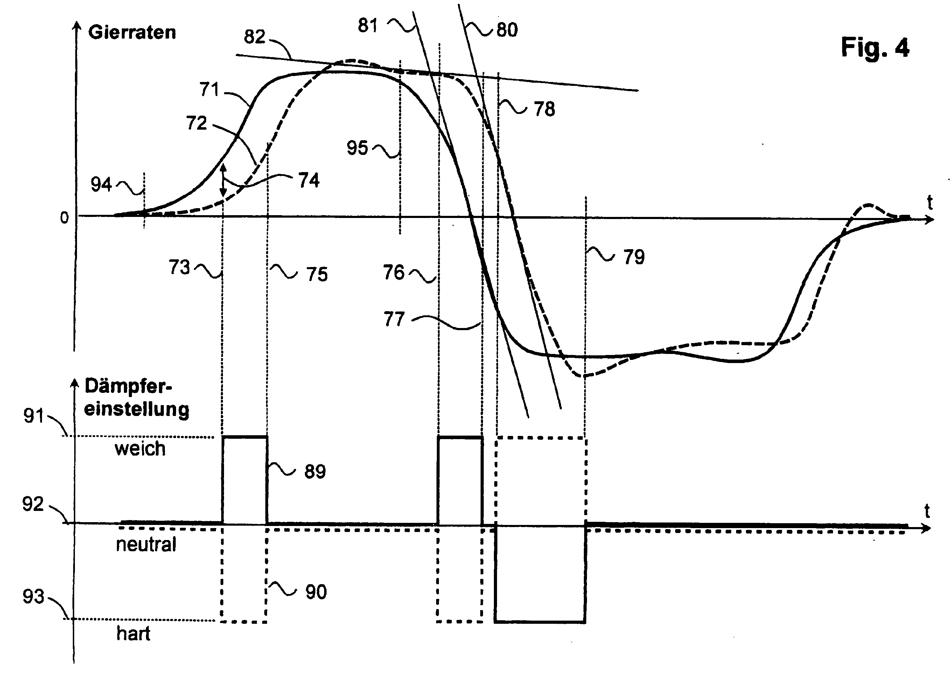

In weiteren Ausführungsbeispielen nach der Erfindung wird die prophylaktische Maßnahme zum Zeitpunkt 49 nicht nur im Nulldurchgang der Gierrate aktiviert, sondern bereits dann, wenn der Gradient der Fahrzeuggierrate den der Referenzgierrate erreicht bzw, überschreitet. In solchen Fällen hat das Fahrzeug bereits eine hinreichende oder sogar zu hohe Dynamik in der neuen Kurvenrichtung aufgebaut, die eine Gierratenbedämpfung erforderlich macht. Ein solches Beispiel zeigt Fig. 4.

Hier wird der Eingriff der untersteuernd wirkenden Dämpfereinstellung bereits zum Zeitpunkt 78 eingeleitet, wo die Gierrate noch nicht den Nullpunkt geschnitten hat. Der Betrag des Gradienten 80 der Fahrzeuggierrate 72 übersteigt aber den Betrag des Gradienten 81 der Referenzgierrate 71. Die vorgezogene Dämpfersteuerung sorgt auch bei abrupten Lenkvorgaben durch den Fahrer (angedeutet in Fig. 4) für eine gute Bedämpfung der Gierratenüberhöhung (Zeitpunkt 79).

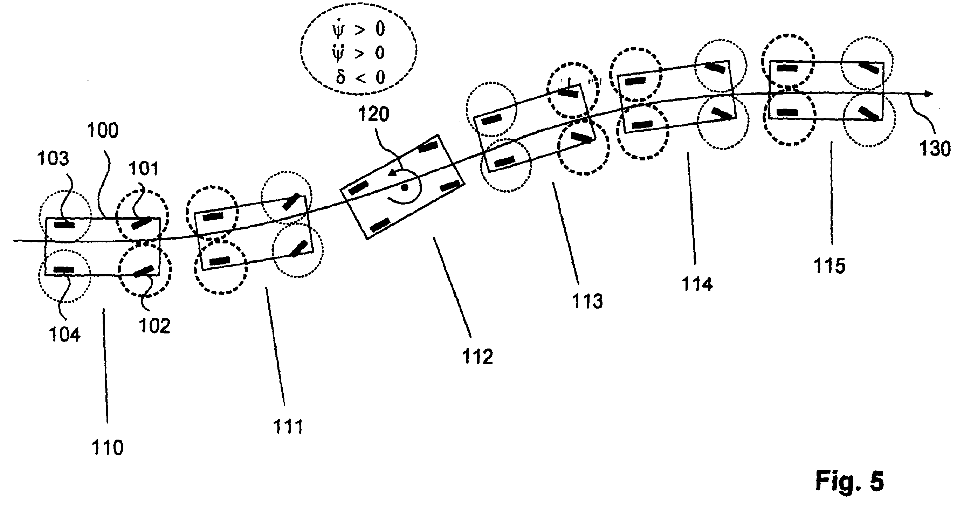

In Fig. 5 ist die Folge von Links- nach Rechtskurve anhand eines stilisierten Fahrzeugs 100 mit den Vorderrädern 101 und 102 (Vorderräder = lenkende Räder, Lenkwinkel durch Stellung der Räder angedeutet) sowie den Hinterrädern 103 und 104 in den zeitlich und räumlich aufeinanderfolgenden Phasen 110 bis 115 dargestellt.

Der Fahrer versucht bei dem Manöver, dem durch die Linie 130 skizzierten Kurs in Pfeilrichtung zu folgen.

Die dünn bzw. dick gestrichelten Kreise um die Räder geben die jeweilige Dämpferansteuerung in den einzelnen Phasen wieder.

Ein dünner Kreis bedeutet, dass der Dämpfer des betreffenden Rades hart geschaltet ist. Ein dicker Kreis zeigt eine weiche Dämpfercharakteristik an. Der Dämpfer eines Rades ohne Kreis ist neutral geschaltet.

In der Phase 110 versucht der Fahrer in die Linkskurve zu lenken und wird dabei unterstützt, indem die Lenkfähigkeit des Fahrzeugs erhöht wird. Dies geschieht durch weiche Dämpfereinstellung vorn und harte Einstellung hinten. In Phase 111 hat das Fahrzeug eine hinreichend hohe Gierrate aufgebaut und der Gradient der Gierrate $\dot{\psi}$, also die Gierbeschleunigung $\ddot{\psi}$, überschreitet den Gradienten $\dot{\psi}_{ref}$ der Referenzgierrate $\dot{\psi}_{ref}$. Nun wird das Fahrzeug in seiner Linksdrehung bedämpft, indem ihm ein Untersteuerverhalten aufgeprägt wird. Dies geschieht durch weiche Dämpfereinstellung hinten und harte Einstellung vorn.

In Phase 112 dreht das Fahrzeug noch in die Linksrichtung (Gierrate 120), als der Fahrer bereits einen negativen Lenkwinkel eingestellt hat, also die Rechtsdrehung einleiten will. Es liegt also sowohl ein Übersteuern bzgl. der noch vollzogenen Linksdrehung als auch ein Untersteuern bzgl. der angeforderten Rechtsdrehung vor. In dieser Phase muss zunächst die Hinterachse des Fahrzeugs stabilisiert werden, damit diese die Linksdrehung abbauen kann.

Dazu wird abhängig von definierten Schwellen entweder ein untersteuerndes oder neutrales Fahrzeugverhalten durch die Dämpfereinstellung erzwungen. Wenn die Gierrate $\dot{\psi}$ nicht mehr zunimmt, der Gradient $\ddot{\psi}$ also negativ ist, wird umgeschalte auf eine übersteuernde Charakteristik, damit die Vorderachse ein erhöhtes Lenkmoment umsetzen und das Fahrzeug in die neue Rechtsrichtung steuern kann (Phase 113). Aufgrund des hochdynamischen Wechselmanövers ist anschließend in den Phasen 114 und 115 mit einer hohen Gierrate $\dot{\psi}$ in Rechtsrichtung zu rechnen, so dass das Fahrzeug dann wieder eine untersteuernde Charakteristik aufgeprägt bekommt.

Weitere Ausführungsformen der Erfindung bestehen im Falle von kontinuierlich einstellbaren Dämpfern darin, dass alle Maßnahmen der adaptiven Dämpfersteuerung nicht rein digital zwischen zwei Schaltstufen 'weich' oder 'hart' sondern analog erfolgen.

Die analogen Dämpferwerte werden dazu als Funktionen der fahrdynamisch relevanten Größen berechnet, die aus dem ESP bekannt sind. Diese Dämpferwerte können mit anderen Ansteuerwerten, die Resultat von weiteren implementierten Regelstrategien sind, zeitlich exklusiv oder anteilig über Mischungsverhältnisse überlagert werden.

Im Beispiel von Fig. 4 wurde gezeigt, dass in hochdynamischen Fahrsituationen ein schnelles Umschalten der Dämpfercharakteristik erforderlich ist. Die Umsetzung dieser Strategie wird erschwert, wenn langsam reagierende Stellglieder zum Einsatz kommen und/oder die Befehle zum Steuern der Stellglieder über Datenbussysteme verschickt werden. Bei allen o.a. Maßnahmen werden daher erfindungsgemäß die aus Übertragungszeiten resultierende Totzeit $T_T$ sowie die Verzugszeit $T_V$ der Verstelldämpfer in Rechnung gestellt, um aus regelungstechnischer Sicht nicht in Gegenphase zu regeln. Dazu werden die o.a. Schwellenanforderungen zusätzlich als Funktionen von $T_T$ und $T_V$ ausgeführt. Prinzipiell gilt, dass mit zunehmender Summenzeit $T_T + T_V$ die Schwellen verringert werden, um die Entscheidung für eine Verstellmaßnahme zeitlich nach vorn zu verschieben. Damit wird der aus $T_T$ und $T_V$ resultierende Zeitverzug zumindest teilweise kompensiert.

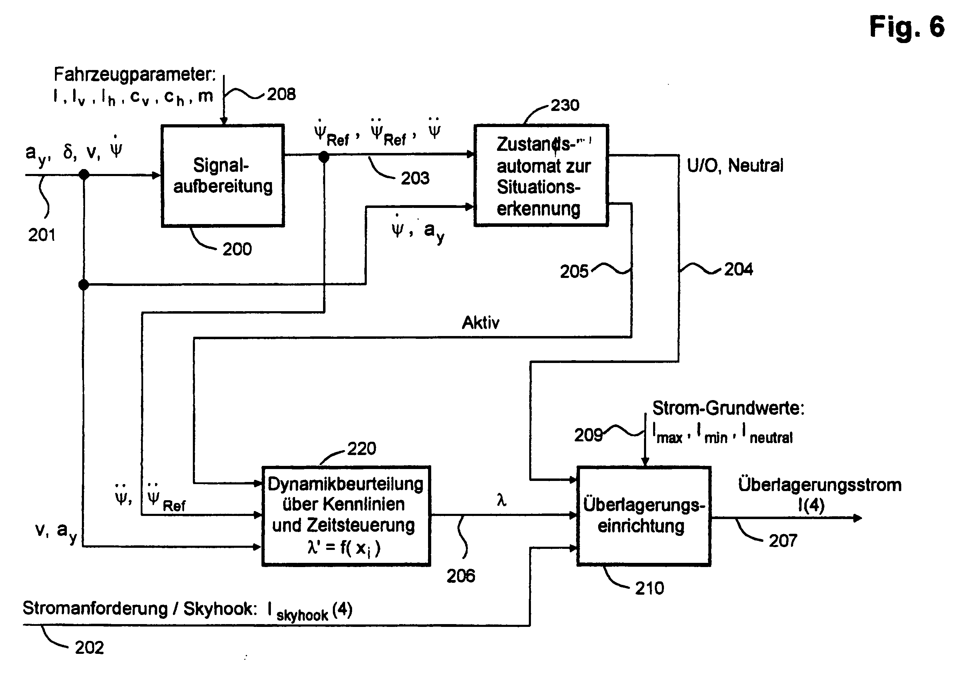

Um die technische Umsetzung der o.a. Regelstrategien darzustellen, zeigen die Fig. 6 bis 10 ein erfindungsgemäßes Realisierungsbeispiel.

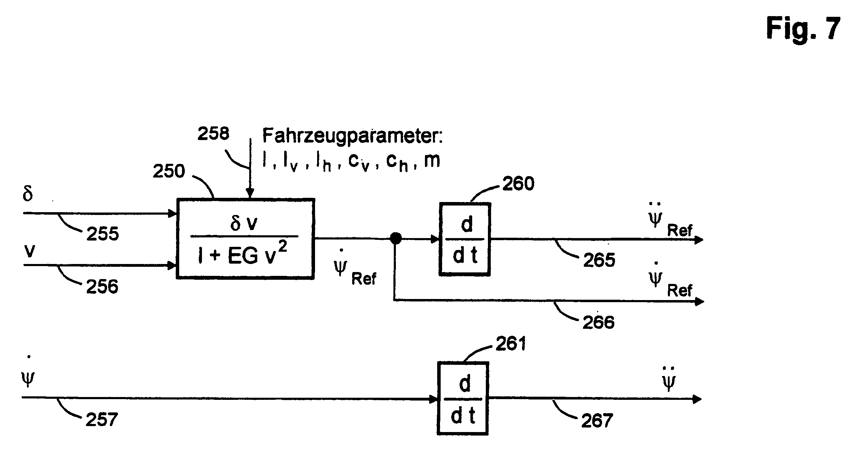

In Fig. 6 ist das Blockschaltbild einer Vorrichtung dargestellt, die aus den vom ESP kommenden Eingangssignalen auf Leitung 201 mit Hilfe der Schaltung 200 (s. detailliertes Schaltbild in Fig. 7) als weitere Signale die Referenzgierrate $\dot{\psi}_{ref}$, deren Ableitung $\ddot{\psi}_{ref}$ sowie die Ableitung $\ddot{\psi}$ der gemessenen Gierrate $\dot{\psi}$ bildet und diese auf Leitung 203 ausgibt. Zusätzlich benötigt die Vorrichtung 200 noch die fahrzeugspezifischen Parameter l, $l_v$, $l_h$, $C_v$, $C_h$, m auf Leitung 208.

Dabei ist 1= Radstand, $l_v$ und $l_h$ = stehen für die Abstände der Hinterachse und der Vorderachse vom Fahrzeugschwerpunkt, c= Koeffizienten für die resultierenden Steifigkeiten aus Reifen-, Radaufhängungs- und Lenkungselastizität, m= Masse und die Indizes v= vorne, h= hinten.

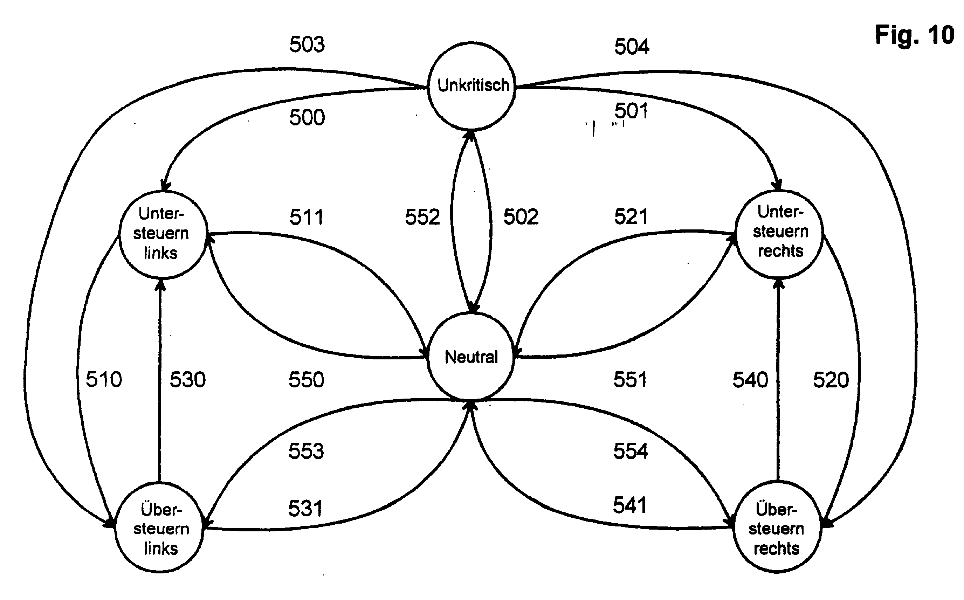

Mittels eines Zustandsautomaten 230 (s. detailliertes Zustandsdiagramm in Fig. 10) werden die Signale $\dot{\psi}_{ref}, \ddot{\psi}_{ref}, \dot{\psi}, \ddot{\psi}$, $\alpha_y$ auf den Leitungen 201 und 203 dazu benutzt, um die jeweils vorliegende Fahrsituation zu bestimmen. Der aktive Zustand (System will mit Dämpfersteuerung eingreifen) wird durch das Aktiv-Flag auf Leitung 205 angezeigt, auf Leitung 204 werden Unter- oder Übersteuersituationen mit dem Flag U/O (Understeering / Oversteering) unterschieden: im Falle eines Untersteuerns ist das Flag 1, bei Übersteuern 0. Der neutrale Zustand wird durch das Neutral-Flag dargestellt, welches 0 wird, wenn ein Über- oder Untersteuern vorliegt, und den Wert 1 bei neutralem Lenkverhalten annimmt.

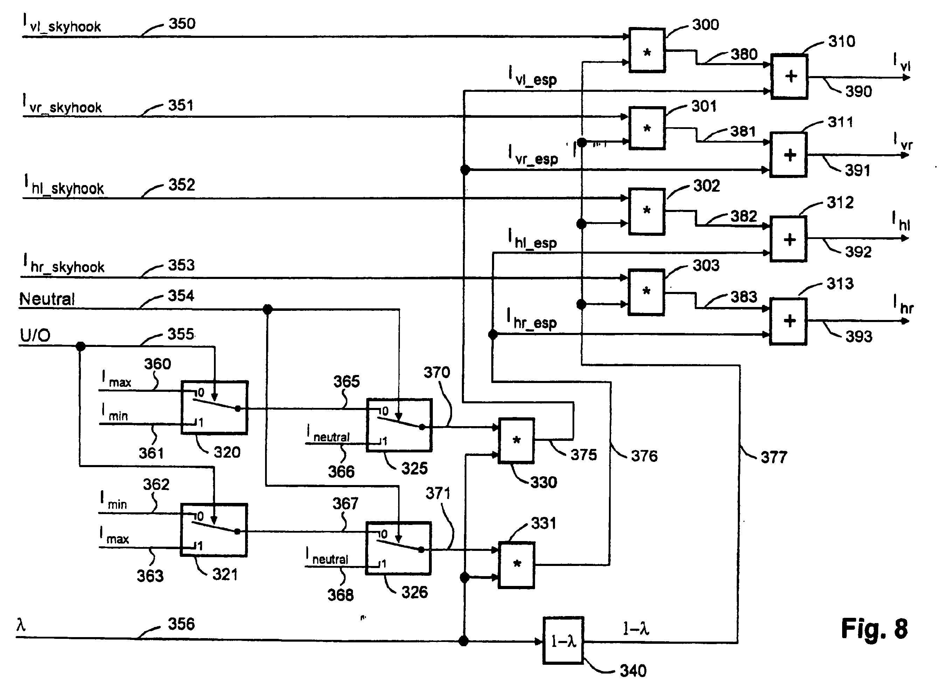

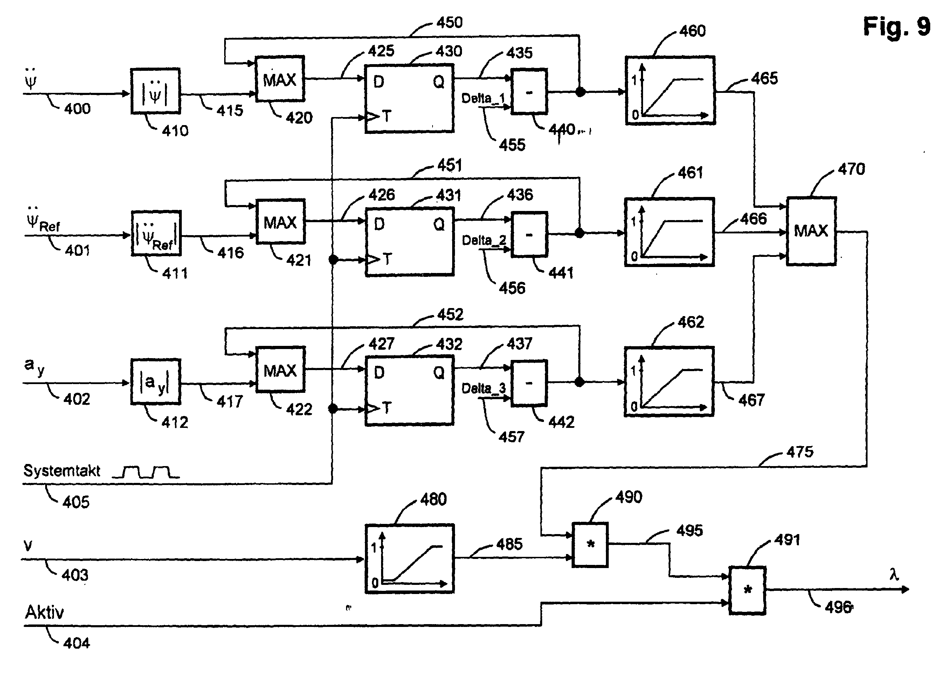

Über Kennlinien und eine Zeitsteuerung im Block 220 (s. detailliertes Schaltbild in Fig. 9) wird anhand der fahrdynamisch relevanten Eingangsgrößen auf den Leitungen 201 und 203 sowie des Aktiv-Flags auf Leitung 205 festgestellt, wie kritisch der vorliegende Fall aus fahrdynamischer Sicht ist. Aus der Gesamtbetrachtung resultiert ein Faktor $\lambda$, der Werte von 0 (völlig unkritisch) bis 1 (sehr kritisch) annehmen kann. Im vorliegenden Realisierungsbeispiel hat der Faktor $\lambda$ die Bedeutung eines Mischungsverhältnisses für eine analoge aus fahrdynamischer Sicht optimierte Dämpferansteuerung, die dem Grundprinzip der Skyhookregelung anteilig überlagert wird. Daher wird $\lambda$ über die Leitung 206 zur Überlagerungseinrichtung 210 (s. detailliertes Schaltbild in Fig. 8) geschickt, die aus $\lambda$, der Steuerinformation auf Leitung 204 sowie den Stromgrundwerten $I_{max}, I_{min}, I_{neutral}$ auf Leitung 209 für alle 4 Radkreise Stromwerte berechnet, die aus Sicht des ESP-Systems bzw. der Regelung sinnvoll sind. Diese werden dann radweise mit den 4 Stromwerten auf Leitung 202 überlagert, die Ergebnis einer Skyhookregelung sein können, die nicht Gegenstand dieser Anmeldung ist. Die 4 Summenstromwerte I(4) gelangen dann über Leitung 207 zu den 4 Stoßdämpfern der Räder und werden beispielsweise dort über entsprechende Treiberschaltungen in physikalische Ströme umgesetzt.

Fig. 7 stellt die Bildung der benötigten Signale dar (Realisierung von Block 200 aus Fig. 6).

Aus dem Lenkwinkel auf Leitung 255, der geschätzten Fahrzeuglängsgeschwindigkeit auf Leitung 256 sowie einigen fahrzeugspezifischen Parametern auf Leitung 258, aus denen sich der Eigenlenkgradient EG berechnen lässt, ergibt sich nach der Formel in Block 250 die Referenzgierrate auf Leitung 266, aus der mit Hilfe des Differenzierglieds 260 noch die Referenzgierbeschleunigung auf Leitung 265 berechnet wird.

Die Fahrzeugparameter auf Leitung 258 können für ein bestimmtes Fahrzeug fest vorgegeben oder während des Betriebs dynamisch vom ESP geschätzt werden.

Über ein weiteres Differenzierglied 261 wird die gemessene Fahrzeuggierrate auf Leitung 257 benutzt, um auch die tatsächliche Gierbeschleunigung auf Leitung 267 zu bestimmen.

Fig. 8 zeigt eine beispielhafte Realisierung für die Überlagerungseinrichtung 210 aus Fig. 6.

Mit Hilfe der Schalter 320, 325 (für die Vorderräder) und 321 und 326 (für die Hinterräder) werden die Signale 'U/O' (1 bei Untersteuern, 0 bei Übersteuern) auf Leitung 355 sowie 'Neutral' auf Leitung 354 ausgewertet, um geeignete Grundstromwerte für die Dämpfer der 4 Räder in Abhängigkeit des im Automaten 230 von Fig. 6 ermittelten Fahrzustands auszuwählen.

Diese Grundstromwerte bewirken die gewünschte Dämpfercharakteristik, wobei gelten soll, dass ein maximaler Strom $I_{max}$ (auf Leitung 360 für die Vorderräder, auf Leitung 363 für die-Hinterräder) den jeweiligen Dämpfer hart, ein mittlerer Strom $I_{neutral}$ (auf Leitung 366 für die Vorderräder, auf Leitung 368 für die Hinterräder) den jeweiligen Dämpfer neutral und ein minimaler Strom $I_{min}$ (auf Leitung 361 für die Vorderräder, auf Leitung 362 für die Hinterräder) den jeweiligen Dämpfer weich schaltet.

Die durch 'U/O' und 'Neutral' ausgewählten Grundstromwerte gelangen dann auf die Leitungen 370 (für die Vorderräder) und 371 (für die Hinterräder) und werden dann mit dem auf Leitung 356 herangeführten Faktor $\lambda$ mit Hilfe der Blöcke 330 und 331 multipliziert. Auf den Leitungen 375 und 376 erscheinen dann für Vorder- und Hinterräder die jeweils benötigten anteiligen Stromwerte $I_{vl\_esp}, I_{vr\_esp}$ bzw. $I_{hl\_esp}, I_{hr\_esp}$.

Der Block 340 legt den Wert '1-$\lambda$' auf Leitung 377, mit dem dann die 4 vom Skyhookregler angeforderten Stromwerte auf den Leitungen 350 bis 353 über die Blöcke 300 bis 303 radindividuell multipliziert werden. Die Ergebnisse stellen die Stromanteile vom Skyhookregler dar und gelangen auf die Leitungen 380 bis 383. Nun werden mit den Addiergliedern 310 bis 313 die ESP- und Skyhook-Stromanteile additiv überlagert und über die Ausgangsleitungen 390 bis 393 zu den Dämpfern geschickt.

Auf diese Weise wird in unkritischen Fällen ($\lambda$ 0 oder << 1) fast nur der Skyhookanteil umgesetzt und somit ein komfortables Fahrverhalten erzielt. In kritischen Fällen ($\lambda$ = 1 oder fast 1) überwiegt der ESP-Anteil und ermöglicht dem Fahrer ein gutes Handling bei reduziertem Dämpfungskomfort.

Fig. 9 zeigt ein Realisierungsbeispiel für die Berechnung des Mischungsfaktors $\lambda$, also des Blocks 220 aus Fig. 6. Dazu werden hier die Maximalwerte einiger fahrdynamisch relevanter Größen aus dem ESP über die Leitungen 400 bis 402 herangeführt. Über die Blöcke 420 bis 422 werden die Beträge der Signale gebildet und über die Leitungen 415 bis 417 auf die Blöcke 420 bis 422 gelegt, die eine Maximumbildung durchführen zwischen den aktuellen Werten auf 415 bis 417 und den gespeicherten früheren Maximumwerten auf den Leitungen 450 bis 452. Die neuen Maxima werden auf die Leitungen 425 bis 427 geschaltet und über den Systemtakt auf Leitung 405 zu definierten Zeiten (mit der positiven Flanke des Takts) in die zugehörigen Speicherzellen 430 bis 432 übernommen. Die gespeicherten Maximalwerte erscheinen dann auf den Ausgangsleitungen 435 bis 437. Um eine Vergesslichkeitsfunktion zu realisieren, werden diese Werte mit Hilfe der Subtrahierglieder 440 bis 442 um die kleinen Delta-Beträge auf den Leitungen 455 bis 457 reduziert. Die Ergebnisse erscheinen wiederum auf den Leitungen 450 bis 452 und werden wieder mit den aktuellen Beträgen der fahrdynamisch relevanten Signale (400 bis 401) verglichen. Solange die Eingangssignale 400 bis 402 ansteigen, werden sie in die Speicherzellen 430 bis 432 übernommen. Bei kleinen Eingangssignalen werden die großen gespeicherten Werte mit jedem Systemtakt um die Delta-Werte 455 bis 457 reduziert. Auf diese Weise wird das Auftreten einer hohen Fahrdynamik nach einer definierten Zeit vergessen, da derartige Ereignisse auch nur in einer gewissen Folgezeit relevant sind. Die aktuellen Fahrdynamikwerte 450 bis 452 werden über Bewertungsfunktionen 460 bis 462 in Werte von 0 bis 1 klassifiziert und diese über die Leitungen 465 bis 467 dem lock 470 zugeführt, der das Maximum der Werte auf Leitung 475 schaltet.

Da die ausgewerteten Signale 400 bis 402 nur bei höheren Geschwindigkeiten relevant sind, erfolgt eine weitere Bewertung der Situation durch den Block 480, der das auf Leitung 403 herangeführte geschätzte Längsgeschwindigkeitssignal ebenfalls in einen Wert von 0 bis 1 überführt, der auf Leitung 485 mit Hilfe des Blocks 490 multipliziert wird. Das Ergebnis auf Leitung 495 wird dann noch mit dem Aktiv-Signal auf Leitung 404 (von Block 230 aus Fig. 6 kommend) über den Block 491 multipliziert. Das Ergebnis auf Leitung 496 stellt den Faktor $\lambda$ dar.

Fahrsituationserkennung:

Die Regelstrategie zur phasengenauen Dämpfersteuerung beinhaltet der Block 230 in Fig. 6 und ist als Zustandsautomat in Fig. 10 beschreiben.

Im Folgenden wird eine Fahrsituationserkennung erläutert, anhand derer das Verhalten von kontinuierlich verstellbaren Dämpfern eingestellt und dadurch Einfluss auf das Fahrverhalten des Fahrzeugs genommen wird. Werden die Vorderachsdämpfer weich und die Hinterachsdämpfer hart geschaltet, so wird die Hinterachse bei dynamischen Manövern destabilisiert, sprich die Seitenkraftabstützung an der Hinterachse ist kleiner als an der Vorderachse. Das Fahrzeug neigt zum Übersteuern, die Lenkbarkeit wird unterstützt.

Umgekehrt verhält es sich, wenn man die Vorderachsdämpfer hart und die Hinterachsdämpfer weich stellt. Das Fahrzeug neigt zum Untersteuern, die Stabilisierung des Fahrzeugs wird unterstützt.

Fig. 10 stellt anhand eines Zustandsgraphen den erfindungsgemäßen Ablauf der Steuerungsaktivitäten dar. Das Fahrzeug befindet sich zunächst im Zustand 'Unkritisch', dadurch gekennzeichnet, dass folgende Bedingungen erfüllt sind :

$$\left| \dot{\psi}_{ref} - \dot{\psi} \right| < \varepsilon_1 \qquad \text{und} \qquad \left| \ddot{\psi}_{ref} - \ddot{\psi} \right| < \varepsilon_2 \qquad \text{und} \qquad \left| a_y \right| < \varepsilon_4$$

In diesem Zustand bleibt die Komfort-Regelung der Dämpfer aktiviert (nur in diesem Zustand) und aus dem ESP heraus werden keine Einstellungen bezüglich der Dämpfer angefordert.

Fährt der Fahrzeugführer quasi statisch in eine Kurve und überschreitet die Querbeschleunigung einen bestimmten Schwellwert, dann geht man über in den Zustand 'Neutral'.

$$(502) \qquad \left| \dot{\psi}_{ref} - \dot{\psi} \right| < \varepsilon_1 \qquad \text{und} \qquad \left| \ddot{\psi}_{ref} - \ddot{\psi} \right| < \varepsilon_2 \qquad \text{und}$$

$$\left| a_y \right| > \varepsilon_4$$

Die Dämpfer werden neutral geschaltet und somit die Komfort-Regelung der Dämpfer deaktiviert.

Kommt man aufgrund der abnehmenden Querbeschleunigung vom Zustand ‚Neutral' in den Zustand 'Unkritisch', kann der Gradient der Fahrzeuggierrate $\dot{\psi}$ größer sein als der Gradient der Referenzgierrate $\ddot{\psi}_{ref}$ bei Änderung der Lenkvorgabe in entgegengesetzte Richtung. Ist die Bedingung

$$(503) \qquad \ddot{\psi}_{ref} \leq \ddot{\psi} \qquad \text{und} \qquad \ddot{\psi} > \varepsilon_3$$

erfüllt, geht man über in den Zustand ‚übersteuern in der Linkskurve' .
Die Dämpfer werden so geschaltet, dass die Stabilisierung des Fahrzeugs unterstützt wird.

Ist hingegen die Bedingung

$$(504) \qquad \ddot{\psi}_{ref} \geq \ddot{\psi} \qquad \text{und} \qquad \ddot{\psi} < -\varepsilon_3$$

erfüllt, geht man über in den Zustand , Übersteuern in der Rechtskurve'.

Die Dämpfer werden so geschaltet, dass die Stabilisierung des Fahrzeugs unterstützt wird.

Liegt der Zustand 'Neutral' vor und wird Bedingung (552) erfüllt, d.h. die Querbeschleunigung sinkt unter ein Mindestmaß

$$(552) \qquad \left| \dot{\psi}_{ref} - \dot{\psi} \right| < \varepsilon_1 \qquad \text{und} \qquad \left| \ddot{\psi}_{ref} - \ddot{\psi} \right| < \varepsilon_2 \qquad \text{und}$$

$$\left| a_y \right| < \varepsilon_5$$

dann geht man wieder über in den Zustand 'Unkritisch'.

Durch die unterschiedlichen Schwellen $\varepsilon_1$ und $\varepsilon_5$ wird ein unnötiges Hin- und Herschalten zwischen den Zuständen 'Unkritisch' und 'Neutral' vermieden.

Die Komfort-Regelung der Dämpfer kann wieder aktiviert werden.

Kann das Fahrzeug dem Sollverlauf gut folgen und wurde die Querbeschleunigung noch nicht abgebaut, so befindet man sich im Zustand 'Neutral'. Aufgrund einer neuen Lenkvorgabe entgegen der alten Richtung gelangt man mit der Bedingung

$$(553) \qquad \ddot{\psi}_{ref} \leq \ddot{\psi} \qquad \text{und} \qquad \ddot{\psi} > \varepsilon_3$$

in den Zustand Übersteuern in der Linkskurve' beziehungsweise mit der Bedingung

$$(554) \qquad \ddot{\psi}_{ref} \geq \ddot{\psi} \qquad \text{und} \qquad \ddot{\psi} < -\varepsilon_3$$

in den Zustand ‚Übersteuern in der Rechtskurve'.

Die Dämpfer werden jeweils so geschaltet, dass die Stabilisierung des Fahrzeugs unterstützt wird.

Vollführt der Fahrer ein Lenkmanöver, bei dem das Fahrzeug nicht mehr dem vorgegebenen Referenzverhalten folgen kann, sprich sind die folgenden Bedingungen erfüllt:

$$(500) \qquad \dot{\psi}_{ref} > \dot{\psi} + \varepsilon_1 \qquad \text{und} \qquad \ddot{\psi}_{ref} > \ddot{\psi} + \varepsilon_2$$

geht man über in den Zustand 'Untersteuern in der Linkskurve'. Es wird ein Übersteuersignal an die Dämpfer geschickt, um die Lenkbarkeit zu unterstützen.

Wird die Lenkvorgabe beibehalten, divergieren die Gradienten der Gierraten zunächst, da das Fahrzeug träge in seinem Verhalten ist. Allerdings wird das Fahrzeug nach einer gewissen Zeit der Vorgabe folgen können, oder eine neue Lenkrichtung wird vorgegeben. Die Bedingung, dass der Gradient der Fahrzeuggierrate $\ddot{\psi}$ größer wird als der Gradient der Referenzgierrate $\ddot{\psi}_{ref}$ (510) liegt vor. Ein Übersteuern in der Linkskurve wird erkannt, wenn

$$(510) \qquad \ddot{\psi}_{ref} \leq \ddot{\psi}$$

erfüllt ist.

Die Dämpfer werden so geschaltet, dass die Stabilisierung des Fahrzeugs unterstützt wird.

Wird jedoch der Gradient der Referenzgierrate $\ddot{\psi}_{ref}$ wieder größer als der Gradient der Fahrzeuggierrate $\ddot{\psi}$, dann liegt ein Untersteuern in der Linkskurve vor (530).

Die Dämpfer werden so geschaltet, dass die Lenkbarkeit unterstützt wird.

$$(530) \qquad \ddot{\psi}_{ref} > \ddot{\psi}$$

Befindet sich das Fahrzeug aber noch im Zustand 'übersteuern in der Linkskurve', werden die Dämpfer so geschaltet, dass die Stabilisierung unterstützt wird.

Nimmt der Gradient der Fahrzeuggierrate $\ddot{\psi}$ ab und wird die folgende Bedingung erfüllt,

$$(531) \qquad \ddot{\psi} \leq \varepsilon_3$$

dann wird übergegangen in den Zustand 'Neutral'. Hier wartet man ab, wie das Fahrzeug reagiert.

Die Dämpfer werden neutral geschaltet, sodass das Über-/Untersteuern nicht begünstigt wird.

Liegt jedoch der Fall vor, dass die Referenzgierrate $\dot{\psi}_{ref}$ wieder über der Fahrzeuggierrate $\dot{\psi}$ liegt, d.h. es wurde wieder in die gleichen Richtung weitergelenkt (links) und ist Bedingung

$$(550) \qquad \dot{\psi}_{ref} > \dot{\psi} + \varepsilon_1 \qquad \text{und} \qquad \ddot{\psi}_{ref} > \ddot{\psi} + \varepsilon_2$$

erfüllt, dann liegt wieder der Zustand 'Untersteuern in der Linkskurve' vor.

Befindet sich das Fahrzeug noch im Zustand 'Neutral' und weichen die Gierraten und die Gradienten der Gierraten so von einander ab, dass die Bedingung (551) erfüllt wird,

$$(551) \qquad \dot{\psi}_{ref} < \dot{\psi} - \varepsilon_1 \qquad \text{und} \qquad \ddot{\psi}_{ref} < \ddot{\psi} - \varepsilon_2$$

dann geht das Fahrzeug über in den Zustand 'Untersteuern in der Rechtskurve' .

Die Dämpfer werden so geschaltet, dass die Lenkbarkeit unterstützt wird.

Wird die Lenkvorgabe beibehalten, divergieren die Gradienten der Gierraten, da das Fahrzeug träge in seinem Verhalten ist. Allerdings wird das Fahrzeug nach einer gewissen Zeit der Vorgabe folgen können, oder eine neue Lenkrichtung wird vorgegeben. Die Bedingung, dass der Gradient der Fahrzeuggierrate $\ddot{\psi}$ kleiner wird als der Gradient der Referenzgierrate $\ddot{\psi}_{ref}$ (520) liegt vor. Ein Übersteuern in der Rechtskurve wird erkannt.

$$(520) \qquad \ddot{\psi}_{ref} \geq \ddot{\psi}$$

Die Dämpfer werden so geschaltet, dass das Fahrzeug stabilisiert wird.

Wird jedoch der Gradient der Referenzgierrate $\ddot{\psi}_{ref}$ kleiner als der Gradient der Fahrzeuggierrate $\ddot{\psi}$, dann liegt wieder ein Untersteuern in der Rechtskurve vor (540).

$$(540) \qquad \ddot{\psi}_{ref} < \ddot{\psi}$$

Die Dämpfer werden so geschaltet, dass die Lenkbarkeit unterstützt wird.

Befindet sich das Fahrzeug aber noch im Zustand 'Übersteuern in der Rechtskurve', dann werden die Dämpfer so geschaltet, dass die Stabilisierung unterstützt wird.

Nimmt der Gradient der Fahrzeuggierrate $\ddot{\psi}$ ab und wird die folgende Bedingung erfüllt,

$$(541) \qquad -\varepsilon_3 \leq \ddot{\psi}$$

dann wird übergegangen in den Zustand 'Neutral'. Hier wartet man ab, wie das Fahrzeug reagiert. Die Dämpfer werden neutral geschaltet, sodass das Über-/Untersteuern nicht begünstigt wird.

Aus dem Zustand 'Neutral' gelangt man über die Bedingung (550) in den Fahrzustand 'Untersteuern in der Linkskurve' bzw. über Bedingung (551) in der Fahrzustand 'Untersteuern in der Rechtskurve'.

Liegt der Zustand 'Untersteuern in der Linkskurve' vor und unterscheiden sich die Gierraten und Gradienten der Gierraten kaum (511)

$$(511) \qquad \left| \dot{\psi}_{ref} - \dot{\psi} \right| < \varepsilon_1 \qquad \text{und} \qquad \left| \ddot{\psi}_{ref} - \ddot{\psi} \right| < \varepsilon_2$$

dann geht man wieder über in den Zustand 'Neutral'.

Liegt der Zustand 'Untersteuern in der Rechtskurve' vor und unterscheiden sich die Gierraten und Gradienten der Gierraten kaum (521)

$$(521) \qquad \left| \dot{\psi}_{ref} - \ddot{\psi} \right| < \varepsilon_1 \qquad \text{und} \qquad \left| \ddot{\psi}_{ref} - \ddot{\psi} \right| < \varepsilon_2$$

dann geht man wieder über in den Zustand 'Neutral'.

Damit die Dämpfer gemäß der beschriebenen Strategie angesteuert werden, erfolgt in jedem Zustand das Setzen bzw. Zurücksetzen der Steuerflags 'U/O', 'Neutral' und 'Aktiv' in der nachfolgend dargestellten Weise:

Zustand 'Unkritisch':
U/O = 0 oder 1
Neutral = 0 oder 1
Aktiv = 0
Zustand 'Neutral' :
U/0 = 0 oder 1
Neutral = 1
Aktiv = 1
Zustand 'Untersteuern links':
U/0 = 1
Neutral = 0
Aktiv = 1
Zustand 'Untersteuern rechts':
U/O = 1
Neutral = 0
Aktiv = 1
Zustand 'Übersteuern links':
U/O = 0
Neutral = 0
Aktiv = 1
Zustand 'Übersteuern rechts':
U/O = 0
Neutral = 0
Aktiv = 1

**Patentansprüche**

1. Verfahren zur Steuerung und Regelung von digital oder analog einstellbaren Stoßdämpfern, vorzugsweise in einem zweiachsigen Straßenfahrzeug, wobei die Dämpfer situationsabhängig mit einem Ansteuersignal so angesteuert werden, dass im Untersteuer- und Übersteuerfall das Fahrverhalten des Fahrzeugs verbessert wird, **dadurch gekennzeichnet, dass** die Abweichungen zwischen einer nach einem Modell bestimmten Referenzgierrate ($\dot{\psi}_{ref}$) und einer tatsächlich gemessenen Gierrate ($\dot{\psi}$) des Fahrzeugs sowie einer Differenz der Gradienten der beiden Gierraten, also der Referenzgierbeschleunigung ($\ddot{\psi}_{ref}$) und der tatsächlichen Gierbeschleunigung ($\ddot{\psi}$) des Fahrzeugs, ermittelt werden und dass aus den Differenzen der Giergrößen genaue Umschaltzeitpunkte zwischen denen die Dämpfer zur Erhöhung der Lenkfähigkeit des Fahrzeugs im Untersteuerfall, wenn $\dot{\psi}_{ref} > \dot{\psi} + \varepsilon_1$ und $\ddot{\psi}_{ref} > \ddot{\psi} + \varepsilon_2$ oder $\dot{\psi}_{ref} < \dot{\psi} - \varepsilon_1$ und $\ddot{\psi}_{ref} < \ddot{\psi} - \varepsilon_2$ erfüllt sind, und der Fahrstabilität des Fahrzeugs im Übersteuerfall, wenn $\ddot{\psi}_{ref} \leq \ddot{\psi}$ und $\ddot{\psi} > \varepsilon_3$ oder $\ddot{\psi}_{ref} \geq \ddot{\psi}$ und $\ddot{\psi} < -\varepsilon_3$ erfüllt sind, der Räder in Stufen oder kontinuierlich hart oder weich geschaltet werden, ermittelt werden.

2. Verfahren nach Anspruch 1, **dadurch gekennzeichnet, dass** die Referenzgiergrößen in einem linearen Einspurmodell ermittelt werden.

3. Verfahren nach Anspruch 1 oder 2, **dadurch gekennzeichnet, dass** das Regelungskonzept Teil einer ESP-Regelstrategie ist, und die Signale, wie Lenkwinkel, Querbeschleunigung und/oder die Längsgeschwindigkeit v, einer ESP Regelung zur Ermittlung der Fahrsituation und/oder des Ansteuersignals mit verwendet werden.

4. Verfahren nach einem der Ansprüche 1 bis 3, **dadurch gekennzeichnet, dass** ein Untersteuerverhalten in der Linkskurve daran erkannt wird, dass die Bedingung $\dot{\psi}_{ref} > \dot{\psi} + \varepsilon_1$ und $\ddot{\psi}_{ref} > \ddot{\psi} + \varepsilon_2$ erfüllt ist, und dass ein Untersteuerverhalten in der Rechtskurve daran erkannt wird, dass die Bedingung $\dot{\psi}_{ref} < \dot{\psi} - \varepsilon_1$ und $\ddot{\psi}_{ref} < \ddot{\psi} - \varepsilon_2$ erfüllt ist, und dass bei erkanntem Untersteuerverhalten in einer beliebigen der beiden Richtungen die Dämpfer der Vorderräder weich, die der Hinterräder hart geschaltet werden.

5. Verfahren nach einem der Ansprüche 1 bis 4, **dadurch gekennzeichnet, dass** ein Übersteuerverhalten bzgl. einer Linkskurve daran erkannt wird, dass die Bedingung $\ddot{\psi}_{ref} \leq \ddot{\psi}$ und $\ddot{\psi} > \varepsilon_3$ erfüllt ist, und dass ein Übersteuerverhalten bzgl. einer Rechtskurve daran erkannt wird, dass die Bedingung $\ddot{\psi}_{ref} \geq \ddot{\psi}$ und $\ddot{\psi} < -\varepsilon_3$ erfüllt ist, und dass bei erkanntem Übersteuerverhalten in einer beliebigen der beiden Richtungen die Dämpfer der Vorderräder hart, die der Hinterräder weich geschaltet werden

6. Verfahren nach einem der Ansprüche 1 bis 5, **dadurch gekennzeichnet, dass** ein neutrales Verhalten des Fahrzeugs erkannt wird, wenn nach dem Auftreten eines Untersteuerverhaltens die Bedingung $|\dot{\psi}_{ref} - \dot{\psi}| < \varepsilon_1$ und $|\ddot{\psi}_{ref} - \ddot{\psi}| < \varepsilon_2$ erfüllt ist oder nach dem Auftreten eines Übersteuerverhaltens die Bedingung $-\varepsilon_3 \leq \ddot{\psi} \leq \varepsilon_3$ erfüllt ist oder nach dem Auftreten eines unkritischen Verhaltens die Bedingung $|\dot{\psi}_{ref} - \dot{\psi}| < \varepsilon_1$ und $|\ddot{\psi}_{ref} - \ddot{\psi}| < \varepsilon_2$ und $|\alpha_y| > \varepsilon_4$ erfüllt ist, und dass bei erkanntem Neutralverhalten die Dämpfer der Vorderräder und Hinterräder gleichermaßen auf eine mittlere bis hohe Dämpfung geschaltet werden.

7. Verfahren nach einem der Ansprüche 1 bis 6, **dadurch gekennzeichnet, dass** ein unkritisches Fahrverhalten nach dem Auftreten eines neutralen Verhaltens **dadurch** erkannt wird, dass die Bedingung $|\dot{\psi}_{ref} - \dot{\psi}| < \varepsilon_1$ und $|\ddot{\psi}_{ref} - \ddot{\psi}| < \varepsilon_2$ und $|\alpha_y| < \varepsilon_5$ erfüllt ist, und dass bei erkanntem unkritischem Verhalten die Dämpfer wieder in den Zustand geschaltet werden, der der verwendeten Standard-Regelstrategie entspricht.

8. Verfahren nach einem der Ansprüche 1 bis 7, **dadurch gekennzeichnet, dass** die Dämpfung der Stoßdämpfer nicht nur in den diskreten Stufen weich, mittel, hart, sondern kontinuierlich erfolgt, wobei das Dämpfungsmaß von der jeweiligen Fahrsituation abhängt.

9. Verfahren nach einem der Ansprüche 1 bis 8, **dadurch gekennzeichnet, dass** das Maß der kontinuierlich eingestellten Dämpfung von der Dynamik der jeweiligen Fahrsituation abhängt, und in die Beurteilung der Fahrdynamik mindestens die Gierrate und/oder die Gierbeschleunigung des Fahrzeugs, die Referenz-Gierrate und/oder Referenz-Gierbeschleunigung sowie die Querbeschleunigung des Fahrzeugs einbezogen werden.

10. Verfahren nach einem der Ansprüche 1 bis 9, **dadurch gekennzeichnet, dass** die Beträge der zur Beurteilung der Fahrdynamik ermittelten Signale mittels der Längsgeschwindigkeit des Fahrzeugs gewichtet werden

11. Verfahren nach einem der Ansprüche 1 bis 10, **dadurch gekennzeichnet, dass** zur Beurteilung der Fahrdynamik nicht nur die aktuell zu einem Zeitpunkt gemessenen bzw. berechneten Fahrdynamiksignale verwendet werden, sondern auch der Verlauf dieser Signale innerhalb eines vergangenen Zeitintervalls ...delta_T..., wobei die Maximalwerte der Signale gespeichert und durch lineare oder degressive Reduzierung im Laufe der Zeit verlernt werden

12. Verfahren nach den Ansprüchen 1 bis 11, **dadurch gekennzeichnet, dass** die Ansteuerung der Dämpfer mit dem phasenrichtigen Ansteuersignal mit den Anforderungen weiterer Dämpfersteuerungsmechanismen (beispielsweise Skyhook-Regelstrategie) additiv überlagert werden.

13. Verfahren nach den Ansprüchen 1 bis 12, **dadurch gekennzeichnet, dass** das Maß der additiven Überlagerung verschiedener Anforderungen an die Stoßdämpfer durch den Grad der erreichten Fahrdynamik festgelegt wird und dass bei hoher Fahrdynamik ein hoher Anteil bis 100% vorgegeben wird, während bei geringer Fahrdynamik nur ein kleiner Anteil bis 0% vorgegeben und einem entsprechend großen Anteil einer weiteren Regelstrategie überlagert wird.

**14.** Verfahren nach einem der Ansprüche 1 bis 13, **dadurch gekennzeichnet, dass** alle Schwellen ε zur Bestimmung der Fahrsituation an die bei der Datenübertragung zwischen dem Regler und den Stellgliedern (Stoßdämpfern) auftretenden Totzeiten sowie die Verzugszeiten der Stellglieder angepasst werden, wobei gilt, dass bei einer größeren Summe aus Tot- und Verzugszeit kleinere Schwellen verwendet werden, damit die Reaktion des Umschaltens rechtzeitig erfolgt.

**15.** ESP-Regelung **gekennzeichnet durch** ein Verfahren nach einem der Ansprüche 1 bis 14.

**16.** Vorrichtung zur Steuerung und/oder Regelung von digital oder analog einstellbaren Stoßdämpfern, vorzugsweise in einem zweiachsigen Straßenfahrzeug, wobei die Dämpfer situationsabhängig so angesteuert werden, dass im Untersteuer- und Übersteuerfall das Fahrverhalten des Fahrzeugs verbessert wird, **gekennzeichnet durch** eine Ermittlungseinheit (200) die eine Referenzgierrate ($\dot{\psi}_{ref}$) und die tatsächlich gemessenen Gierrate ($\dot{\psi}$) des Fahrzeugs sowie die Gradienten der beiden Gierraten, also die Referenzgierbeschleunigung ($\ddot{\psi}_{ref}$) und die tatsächlichen Gierbeschleunigung ($\ddot{\psi}$) des Fahrzeugs, ermittelt, einer weiteren Ermittlungseinheit (230) zum Ermitteln von Fahrsituationen mit Wankneigung bzw. Wanktendenz, nämlich einem Untersteuerverhalten bei dem die Bedingungen $\dot{\psi}_{ref} > \dot{\psi}+\varepsilon_1$ und $\ddot{\psi}_{ref} > \ddot{\psi}+\varepsilon_2$ oder $\dot{\psi}_{ref} < \dot{\psi}-\varepsilon_1$ und $\ddot{\psi}_{ref} < \ddot{\psi}-\varepsilon_2$ oder einem Übersteuerverhalten, bei dem die Bedingungen $\ddot{\psi}_{ref} \leq \ddot{\psi}$ und $\ddot{\psi} > \varepsilon_3$ oder $\ddot{\psi}_{ref} \geq \ddot{\psi}$ und $\ddot{\psi} < -\varepsilon_3$, erfüllt sind, und einer Steuer- und Regeleinheit (220, 210), die in Abhängigkeit von mindestens die Drehung des Fahrzeugs um die Hochachse beschreiben Größen einen Zeitpunkt ermittelt, zu dem eine richtige Ansteuerung der Stoßdämpfer des Fahrzeugs zur Erhöhung der Lenkfähigkeit im Untersteuerfall und der Fahrstabilität im Übersteuerfall durchgeführt.

**17.** Vorrichtung nach Anspruch 16, **dadurch gekennzeichnet, dass** die Referenzgierrate in einem linearen Einspurmodell bestimmt wird, und die Regel- und Steuereinheit (220, 210) unter Einbeziehung der Ermittlungseinheit (230) aus den Giergrößen genaue Umschaltzeitpunkte bestimmt, zwischen denen die Dämpfer der 4 Räder in Stufen oder kontinuierlich hart oder weich geschaltet werden.

**18.** Vorrichtung nach Anspruch 16, **dadurch gekennzeichnet, dass** das Regelungskonzept Teil einer ESP-Regelstrategie ist und die Signale der ESP-Regelung mit in die Regelung und/oder Steuerung der Stoßdämpfer einbezieht.

**19.** Vorrichtung nach Anspruch 16, **dadurch gekennzeichnet, dass**, sie Bestandteil eines ESP-Reglers ist.

**20.** Vorrichtung nach einem der Ansprüche 16 bis 19, **dadurch gekennzeichnet, dass** die Ermittlungseinheit (230) das Untersteuerverhalten in einer Linkskurve daran erkennt, dass die Bedingung $\dot{\psi}_{ref} > \dot{\psi}+\varepsilon_1$ und $\ddot{\psi}_{ref} > \ddot{\psi}+\varepsilon_2$ erfüllt ist, und das Untersteuerverhalten in einer Rechtskurve daran erkennt, dass die Bedingung $\dot{\psi}_{ref} < \dot{\psi}-\varepsilon_1$ und $\ddot{\psi}_{ref} < \ddot{\psi}-\varepsilon_2$ erfüllt ist, und dass bei erkanntem Untersteuerverhalten in einer beliebigen der beiden Richtungen die Ermittlungseinheit (230) ein Signal erzeugt, das dazu verwendet wird, dass die Dämpfer der Vorderräder weich, die der Hinterräder hart geschaltet werden.

**21.** Vorrichtung nach einem der Ansprüche 16 bis 20, **dadurch gekennzeichnet, dass** die Ermittlungseinheit (230) ein Übersteuerverhalten bzgl. einer Linkskurve daran erkennt, dass die Bedingung $\ddot{\psi}_{ref} \leq \ddot{\psi}$ und $\ddot{\psi} > \varepsilon_3$ erfüllt ist, und ein Übersteuerverhalten bzgl. einer Rechtskurve daran erkennt, dass die Bedingung $\ddot{\psi}_{ref} \geq \ddot{\psi}$ und $\ddot{\psi} < -\varepsilon_3$ erfüllt ist, und dass bei erkanntem Übersteuerverhalten in einer beliebigen der beiden Richtungen die Ermittlungseinheit (230) ein Signal erzeugt, das dazu verwendet wird, dass die Dämpfer der Vorderräder hart, die der Hinterräder weich geschaltet werden.

**22.** Vorrichtung nach den Ansprüchen 16 bis 21, **dadurch gekennzeichnet, dass** die Ermittlungseinheit (230) ein neutrales Verhalten des Fahrzeugs erkennt, wenn nach dem Auftreten eines Untersteuerverhaltens die Bedingung $|\dot{\psi}_{ref}-\dot{\psi}| < \varepsilon_1$ und $|\ddot{\psi}_{ref}-\ddot{\psi}| < \varepsilon_2$ erfüllt ist oder nach dem Auftreten eines Übersteuerverhaltens die Bedingung $-\varepsilon3 \leq \ddot{\psi} \leq \varepsilon_3$ erfüllt ist oder nach dem Auftreten eines unkritischen Verhaltens die Bedingungen $|\dot{\psi}_{ref}-\dot{\psi}| < \varepsilon_1$ und $|\ddot{\psi}_{ref}-\ddot{\psi}| < \varepsilon_2$ und $|\alpha_y| > \varepsilon_4$ erfüllt sind, und dass bei erkanntem Neutralverhalten die Ermittlungseinheit (230) ein Signal erzeugt, das dazu verwendet wird, dass die Dämpfer der Vorderräder und Hinterräder gleichermaßen auf eine mittlere bis hohe Dämpfung geschaltet werden

**23.** Vorrichtung nach einem der Ansprüche 16 bis 22, **dadurch gekennzeichnet, dass** die Ermittlungseinheit (230) ein unkritisches Fahrverhalten nach dem Auftreten eines neutralen Verhaltens **dadurch** erkennt, dass die Bedingung $|\dot{\psi}_{ref}-\dot{\psi}| < \varepsilon_1$ und $|\ddot{\psi}_{ref}-\ddot{\psi}| < \varepsilon_2$ und $|\alpha_y| < \varepsilon_5$ erfüllt ist, und dass bei erkanntem unkritischem Verhalten die Ermittlungseinheit ein Signal erzeugt, das dazu verwendet wird, dass die Dämpfer wieder in den Zustand geschaltet werden, der der verwendeten Standard-Regelstrategie entspricht.

**24.** Vorrichtung nach einem der Ansprüche 16 bis 23, **dadurch gekennzeichnet, dass** Regel- und Steuereinheit (220, 210) die Dämpfung der Stoßdämpfer nicht nur in den diskreten Stufen weich, mittel, hart, sondern kontinuierlich einstellt, wobei das Dämpfungsmaß von der jeweiligen Fahrsituation abhängt.

**25.** Vorrichtung nach einem der Ansprüche 16 bis 24, **dadurch gekennzeichnet, dass** die Steuer- und Regeleinheit (220, 210) das Maß der kontinuierlich eingestellten Dämpfung von der Dynamik der jeweiligen Fahrsituation ermittelt, wobei als relevante Signale zur Beurteilung der Fahrdynamik die Gierrate und/oder die Gierbeschleunigung des Fahrzeugs, die Referenz-Gierrate und/oder Referenz-Gierbeschleunigung sowie die Querbeschleunigung des Fahrzeugs einbezogen werden.

**26.** Vorrichtung nach einem der Ansprüche 16 bis 25, **dadurch gekennzeichnet, dass** die Beträge der zur Beurteilung der Fahrdynamik verwendeten Signale mittels der Längsgeschwindigkeit des Fahrzeugs gewichtet werden

**27.** Vorrichtung nach einem der Ansprüche 16 bis 26, **dadurch gekennzeichnet, dass** zur Beurteilung der Fahrdynamik nicht nur die aktuell zu einem Zeitpunkt gemessenen bzw. berechneten Fahrdynamiksignale verwendet werden, sondern auch der Verlauf dieser Signale innerhalb eines vergangenen Zeitintervalls ...delta_T..., wobei die Maximalwerte der Signale gespeichert und durch lineare oder degressive Reduzierung im Laufe der Zeit verlernt werden.

**28.** Vorrichtung nach einem der Ansprüche 16 bis 27, **dadurch gekennzeichnet, dass** die Ansteuerung der Dämpfer nach dem mit den Anforderungen anderer Dämpfersteuerungsmechanismen (beispielsweise Skyhook-Regelstrategie) additiv überlagert werden.

**29.** Vorrichtung nach einem der Ansprüche 16 bis 28, **dadurch gekennzeichnet, dass** das Maß der additiven Überlagerung verschiedener Anforderungen an die Stoßdämpfer durch den Grad der erreichten Fahrdynamik festgelegt wird und dass bei hoher Fahrdynamik ein hoher Anteil bis 100% vorgegeben wird, während bei geringer Fahrdynamik nur ein kleiner Anteil bis 0% vorgegeben und einem entsprechend großen Anteil einer anderen Regelstrategie überlagert wird.

**30.** Vorrichtung nach einem der Ansprüche 16 bis 29, **dadurch gekennzeichnet, dass** alle Schwellen zur Bestimmung der Fahrsituation an die bei der Datenübertragung zwischen dem Regler und den Stellgliedern (Stoßdämpfern) auftretenden Totzeiten sowie die Verzugszeiten der Stellglieder angepasst werden, wobei gilt, dass bei einer größeren Summe aus Tot- und Verzugszeit kleinere Schwellen verwendet werden, damit die Reaktion des Umschaltens rechtzeitig erfolgt.

**Claims**

**1.** Method for the regulation and control of digitally or analogically adjustable shock absorbers, preferably in a two-axle road vehicle, wherein the shock absorbers are controlled according to the situation by means of a control signal such that the road performance of the vehicle is improved when understeering or oversteering occurs, **characterized in that** the deviations between a reference yaw rate ($\dot{\psi}_{ref}$), which is determined according to a model, and an actually measured yaw rate ($\dot{\psi}$) of the vehicle and a difference between the gradients of the two rates, that is the reference yaw acceleration ($\ddot{\psi}_{ref}$) and the actual yaw acceleration ($\ddot{\psi}$) of the vehicle, are determined, and **in that** from the differences of the yaw rates accurate phase switching moments in time are determined, between which the shock absorbers of the wheels can be switched in steps or continuously to hard or to soft in order to enhance the steerability of the vehicle in a case of understeering, if $\dot{\psi}_{ref}>\dot{\psi}+\varepsilon_1$ and $\ddot{\psi}_{ref}>\ddot{\psi}+\varepsilon_2$ or $\dot{\psi}_{ref}<\dot{\psi}-\varepsilon_1$ and $\ddot{\psi}_{ref}<\ddot{\psi}-\varepsilon_2$ are satisfied, and the driving stability of the vehicle in a case of oversteering, if $\ddot{\psi}_{ref}\leq\ddot{\psi}$ and $\ddot{\psi}>\varepsilon_3$ or $\ddot{\psi}_{ref}\geq\ddot{\psi}$ and $\ddot{\psi}<-\varepsilon_3$ are satisfied.

**2.** Method according to claim 1, **characterized in that** the reference yaw rates are determined in a linear single-track model.

**3.** Method according to claim 1 or 2, **characterized in that** the control concept is part of an ESP control strategy, and the signals, such as steering angle, lateral acceleration and/or longitudinal speed v, of an ESP control are used for the determination of the driving situation and/or of the control signal.

**4.** Method according to any one of claims 1 to 3, **characterized in that** an understeering behaviour in the left curve is recognized if the condition $\dot{\psi}_{ref} > \dot{\psi}+\varepsilon_1$, and $\ddot{\psi}_{ref} > \ddot{\psi}+\varepsilon_2$ is satisfied, and **in that** an understeering behaviour in the right curve is recognized if the condition $\dot{\psi}_{ref} < \dot{\psi}-\varepsilon_1$ and $\ddot{\psi}_{ref} < \ddot{\psi}-\varepsilon_2$ is satisfied, and **in that**, if an understeering behaviour is recognized in any of the two directions, the shock absorbers of the front wheels are switched to soft and those of the back wheels are switched to hard.

5. Method according to any one of claims 1 to 4, **characterized in that** an oversteering behaviour with respect to a left curve is recognized if the condition $\ddot{\psi}_{ref} \leq \ddot{\psi}$ and $\dot{\psi} > \varepsilon_3$ is satisfied, and **in that** an oversteering behaviour with respect to a right curve is recognized if the condition $\ddot{\psi}_{ref} \geq \ddot{\psi}$ and $\dot{\psi} < -\varepsilon_3$ is satisfied, and **in that**, if an oversteering behaviour is recognized in any of the two directions, the shock absorbers of the front wheels are switched to hard and those of the back wheels are switched to soft.

6. Method according to any one of claims 1 to 5, **characterized in that** a neutral behaviour of the vehicle is recognized if, after an understeering behaviour occurred, the condition $|\dot{\psi}_{ref} - \dot{\psi}| < \varepsilon_1$ and $|\ddot{\psi}_{ref} - \ddot{\psi}| < \varepsilon_2$ is satisfied, or if, after oversteering occurred, the condition $-\varepsilon_3 \leq \dot{\psi} \leq \varepsilon_3$ is satisfied, or if, after the occurrence of an uncritical behaviour, the condition $|\dot{\psi}_{ref} - \dot{\psi}| < \varepsilon_1$ and $|\ddot{\psi}_{ref} - \ddot{\psi}| < \varepsilon_2$ and $|\alpha_y| > \varepsilon_4$ is satisfied, and **in that**, if a neutral behaviour is recognized, the shock absorbers of the front wheels and the back wheels are all switched to medium to high damping.

7. Method according to any one of claims 1 to 6, **characterized in that** an uncritical driving performance is recognized after the occurrence of a neutral behaviour, because the condition $|\dot{\psi}_{ref} - \dot{\psi}| < \varepsilon_1$ and $|\ddot{\psi}_{ref} - \ddot{\psi}| < \varepsilon_2$ and $|\alpha_y| < \varepsilon_5$ is satisfied, and **in that**, if an uncritical behaviour is recognized, the shock absorbers are again switched to the state which corresponds to the standard control strategy used.

8. Method according to any one of claims 1 to 7, **characterized in that** the damping of the shock absorbers does not only occur in the discreet steps soft, medium, hard, but continuously, and the amount of damping depends on the given driving situation.

9. Method according to any one of claims 1 to 8, **characterized in that** the amount of the continuously regulated damping depends on the dynamics of the given driving situation, and **in that** one includes, in the evaluation of the dynamics of movement, at least the yaw rate and/or the yaw acceleration of the vehicle, the reference yaw rate and/or the reference yaw acceleration as well as the lateral acceleration of the vehicle.

10. Method according to any one of claims 1 to 9, **characterized in that** the values of the signals, which are determined for the evaluation of the dynamics of movement, are weighted using the longitudinal speed of the vehicle.

11. Method according to any one of claims 1 to 10, **characterized in that** for the evaluation of the dynamics of movement one uses not only the currently measured or calculated dynamics of movement signals at a certain time, but also the course of these signals within a past time interval ...delta_T..., wherein the maximum values of the signals are stored and unlearned over the course of time by linear or degressive reduction.

12. Method according to any one of claims 1 to 11, **characterized in that** the control of the shock absorbers with the phase-correct control signal is superposed by addition over the requirements of additional shock absorber control mechanisms (for example, skyhook control strategy).

13. Method according to any one of claims 1 to 12, **characterized in that** the amount of the additive superposition of different requirements for the shock absorbers is established by the amount of the dynamics of movement reached and, in the case of high dynamics of movement, a high portion of up to 100% is predefined, while, in the case of lower dynamics of movement, only a small portion of as little as 0% is predefined and superposed over a correspondingly large portion of an additional control strategy.

14. Method according to any one of claims 1 to 13, **characterized in that** all the thresholds $\varepsilon$ are adapted, for the determination of the driving situation, to the reaction times which occur during the data transfer between the controller and the adjustment elements (shock absorbers), and to the delay times of the adjustment elements, and in applies that, in the case of a larger sum of reaction time and delay time, smaller thresholds are used so that the switching reaction occurs on time.

15. ESP control **characterized by** a method according to any one of claims 1 to 14.

16. Device for the control and/or adjustment of digitally or analogically adjustable shock absorbers, preferably in a two-axle road vehicle, wherein the shock absorbers are controlled according to the situation in such a manner that the road performance of the vehicle is improved when understeering or oversteering occurs, **characterized by** a determination unit (200) which determines a reference yaw rate ($\dot{\psi}_{ref}$) and the actually measured yaw rate ($\dot{\psi}$) of the vehicle and the gradients of the two yaw rates, that means the reference yaw acceleration ($\ddot{\psi}_{ref}$) and the actual yaw acceleration ($\ddot{\psi}$) of the vehicle, another determination unit (230) for determining driving situations with a tendency to rolling motion, that means an understeering behaviour where the conditions $\dot{\psi}_{ref}>\dot{\psi}+\varepsilon_1$ and $\ddot{\psi}_{ref}>\ddot{\psi}+\varepsilon_2$ or $\dot{\psi}_{ref}<\dot{\psi}-\varepsilon_1$ and $\ddot{\psi}_{ref}<\ddot{\psi}-\varepsilon_2$ are satisfied, or an oversteering behaviour, where the conditions $\ddot{\psi}_{ref}\leq\ddot{\psi}$ and $\ddot{\psi}>\varepsilon_3$ or $\ddot{\psi}_{ref}\geq\ddot{\psi}$ and $\ddot{\psi}<-\varepsilon_3$ are satisfied, and a regulation and control unit (220, 210), which depending on variables that describe at least the rotation of the vehicle about the vertical axis, determines a moment in time, at which a correct phase control of the shock absorbers of the vehicle is carried out to increase the steerability when understeering occurs and the driving stability when oversteering occurs.

17. Device according to claim 16, **characterized in that** the reference yaw rate is determined in a linear single-track model, and the regulation and control unit (220, 210), with inclusion of the determination unit (230), determines phase-accurate switching moments in time from the yaw magnitudes, between which moments in time the shock absorbers of the four wheels are switched to hard or soft in steps or continuously.

18. Device according to claim 16, **characterized in that** the control concept is part of an ESP control strategy and includes the signals of the ESP control in the regulation and/or control of the shock absorbers.

19. Device according to claim 16, **characterized in that** it is part of an ESP controller.

20. Device according to any one of claims 16 to 19, **characterized in that** the determination unit (230) recognizes the understeering behaviour in a left curve if the condition $\dot{\psi}_{ref}>\dot{\psi}+\varepsilon_1$ and $\ddot{\psi}_{ref}>\ddot{\psi}+\varepsilon_2$ is satisfied, and the understeering behaviour in a right curve if the condition $\dot{\psi}_{ref}<\dot{\psi}-\varepsilon_1$ and $\ddot{\psi}_{ref}<\ddot{\psi}-\varepsilon_2$ is satisfied, and **in that**, if understeering behaviour is recognized in any of the two directions, the determination unit (230) generates a signal which is used to switch the shock absorbers of the front wheels to soft and those of the back wheels to hard.

21. Device according to any one of claims 16 to 20, **characterized in that** the determination unit (230) recognizes an oversteering behaviour with respect to a left curve if the condition $\ddot{\psi}_{ref}\leq$ und $\ddot{\psi}>\varepsilon_3$ is satisfied, and an oversteering behaviour with respect to a right curve if the condition $\ddot{\psi}_{ref}\geq\ddot{\psi}$ and $\ddot{\psi}<-\varepsilon_3$ is satisfied, and **in that**, if oversteering behaviour is recognized in any of the two directions, the determination unit (230) generates a signal which is used to switch the shock absorbers of the front wheels to hard and those of the back wheels to soft.

22. Device according to claims 16 to 21, **characterized in that** the determination unit (230) recognizes a neutral behaviour of the vehicle if, after the occurrence of an understeering behaviour, the condition $|\dot{\psi}_{ref}-\dot{\psi}|<\varepsilon_1$ and $|\ddot{\psi}_{ref}-\ddot{\psi}|<\varepsilon_2$ satisfied, or if, after the occurrence of an oversteering behaviour, the condition $-\varepsilon_3\leq\ddot{\psi}\leq\varepsilon_3$ is satisfied, or if, after the occurrence of an uncritical behaviour, the conditions $|\dot{\psi}_{ref}-\dot{\psi}|<\varepsilon_1$ and $|\ddot{\psi}_{ref}-\ddot{\psi}|<\varepsilon_2$ and $|\alpha_y|>\varepsilon_4$ are satisfied, and **in that**, if neutral behaviour is recognized, the determination unit (230) generates a signal which is used to switch the shock absorbers of the front wheels and back wheels equally to medium to high damping.

23. Device according to any one of claims 16 to 22, **characterized in that** the determination unit (230) recognizes an uncritical road performance after the occurrence of a neutral behaviour if the condition $|\dot{\psi}_{ref}-\dot{\psi}|<\varepsilon_1$ and $|\ddot{\psi}_{ref}-\ddot{\psi}|<\varepsilon_2$ and $|\alpha_y|<\varepsilon_5$ is satisfied, and **in that**, if uncritical behaviour is recognized, the determination unit generates a signal which is used to switch the shock absorbers back to the state which corresponds to the standard control strategy used.

24. Device according to any one of claims 16 to 23, **characterized in that** the regulation and control unit (220, 210) does not adjust the damping of the shock absorbers only in the discreet steps soft, medium, hard, but continuously, with the amount of damping depending on the given driving situation.

25. Device according to any one of claims 16 to 24, **characterized in that** the control and regulation unit (220, 210) determines the amount of the continuously adjusted damping from the dynamics of the given driving situation, wherein, as relevant signals for the evaluation of the dynamics of movement, one takes into account the yaw rate and/or the yaw acceleration of the vehicle, the reference yaw rate and/or reference yaw acceleration, as well as the lateral acceleration of the vehicle.

26. Device according to any one of claims 16 to 25, **characterized in that** the values of the signals, which are used for the evaluation of the dynamics of movement, are weighted by means of the longitudinal speed of the vehicle.

27. Device according to any one of claims 16 to 26, **characterized in that**, for the evaluation of the dynamics of movement, one uses not only the currently measured or calculated dynamics of movement signals at a moment in time, but also the course of the signals within a past time interval ...delta_T..., and the maximum values of the signals are stored and unlearned by linear or degressive reduction over time.

**28.** Device according to any one of claims 16 to 27, **characterized in that** the control of the shock absorbers is superposed by addition over the requirements of other shock absorber control mechanisms (for example skyhook control strategy).

**29.** Device according to any one of claims 16 to 28, **characterized in that** the amount of the additive superposition of different requirements for the shock absorbers is determined by the amount of the dynamics of movement reached, and **in that**, in the case of high dynamics of movement, a high portion of up to 100% is predefined, while, in the case of lower dynamics of movement, only a small portion as low as 0% is predefined and superposed over an accordingly high portion of another control strategy.

**30.** Device according to any one of claims 16 to 29, **characterized in that** all thresholds for the determination of the driving situation are adapted to the reaction times, which occur during the data transfer between the controller and the adjustment elements (shock absorbers), and to the delay times of the adjustment elements, and it applies that smaller thresholds are used in the case of a larger sum of reaction time and delay time so that the switching reaction occurs on time.

**Revendications**

**1.** Procédé de commande et de régulation d'amortisseurs à réglage numérique ou analogique, de préférence dans un véhicule routier à deux essieux, les amortisseurs étant commandés avec un signal de commande, en fonction de la situation, de manière que la conduite du véhicule soit améliorée en cas de sous-virage et de survirage, **caractérisé en ce que** les écarts entre une embardée de référence ($\dot{\psi}_{ref}$) déterminée selon un modèle et une embardée ($\dot{\psi}$) mesurée effectivement du véhicule ainsi qu'une différence des gradients des deux embardées, c'est-à-dire l'accélération d'embardée de référence ($\ddot{\psi}_{ref}$) et l'accélération d'embardée effective ($\ddot{\psi}$) du véhicule sont déterminés, et **en ce qu'**à partir des différences des valeurs d'embardée sont déterminés des instants de commutation précis entre lesquels les amortisseurs des roues sont commandés durs ou souples, progressivement ou en continu, pour accroître la dirigeabilité du véhicule en cas de sous-virage - lorsque $\dot{\psi}_{ref} > \dot{\psi} + \varepsilon_1$ et $\ddot{\psi}_{ref} > \ddot{\psi} + \varepsilon_2$ ou $\dot{\psi}_{ref} < \dot{\psi} - \varepsilon_1$ et $\ddot{\psi}_{ref} < \ddot{\psi} - \varepsilon_2$ sont satisfaits -, ainsi que la stabilité du véhicule en cas de survirage - lorsque $\ddot{\psi}_{ref} \leq \ddot{\psi}$ et $\ddot{\psi} > \varepsilon_3$ ou $\ddot{\psi}_{ref} \geq \ddot{\psi}$ et $\ddot{\psi} < \varepsilon_3$ sont satisfaits.

**2.** Procédé selon la revendication 1, **caractérisé en ce que** les valeurs d'embardée de référence sont déterminées dans un modèle linéaire à une voie.

**3.** Procédé selon la revendication 1 ou 2, **caractérisé en ce que** le concept de régulation fait partie d'une stratégie de régulation ESP, et les signaux, tels que l'angle de braquage, l'accélération transversale et/ou la vitesse longitudinale v, d'une régulation ESP, sont utilisés aussi pour déterminer la situation de conduite et/ou le signal de commande.

**4.** Procédé selon l'une des revendications 1 à 3, **caractérisé en ce qu'**un sous-virage dans la courbe à gauche est reconnu par le fait que la condition $\dot{\psi}_{ref} > \dot{\psi} + \varepsilon_1$ et $\ddot{\psi}_{ref} > \ddot{\psi} + \varepsilon_2$ est satisfaite, et **en ce qu'**un sous-virage dans la courbe à droite est reconnu **en ce que** la condition $\dot{\psi}_{ref} < \dot{\psi} - \varepsilon_1$ et $\ddot{\psi}_{ref} < \ddot{\psi} - \varepsilon_2$ est satisfaite, et **en ce qu'**en cas de reconnaissance d'un sous-virage dans l'une des deux directions quelconques, les amortisseurs des roues avant sont commandées souples, ceux des roues arrière sont commandés durs.

**5.** Procédé selon l'une des revendications 1 à 4, **caractérisé en ce qu'**un survirage dans une courbe à gauche est reconnu **en ce que** la condition $\ddot{\psi}_{ref} \leq \ddot{\psi}$ et $\ddot{\psi} > \varepsilon_3$ est satisfaite, et **en ce qu'**un survirage dans une courbe à droite est reconnu **en ce que** la condition $\ddot{\psi}_{ref} \geq \ddot{\psi}$ et $\ddot{\psi} < - \varepsilon_3$ est satisfaite, et **en ce qu'**en cas de reconnaissance d'un survirage dans l'une des deux directions quelconques, les amortisseurs des roues avant sont commandés durs, ceux des roues arrière sont commandés souples.

**6.** Procédé selon l'une des revendications 1 à 5, **caractérisé en ce qu'**un comportement neutre du véhicule est reconnu lorsqu'après apparition d'un sous-virage, la condition $|\dot{\psi}_{ref} - \dot{\psi}| < \varepsilon_1$ et $|\ddot{\psi}_{ref} - \ddot{\psi}| < \varepsilon_2$ est satisfaite, ou après apparition d'un survirage, la condition $-\varepsilon_3 \leq \ddot{\psi} \leq \varepsilon_3$ est satisfaite ou après apparition d'un comportement non critique

la condition $|\dot\psi_{ref}-\dot\psi|<\varepsilon_1$ et $|\ddot\psi_{ref}-\ddot\psi|<\varepsilon_2$ et $|\alpha_y|>\varepsilon_4$ est satisfaite, et **en ce qu'**en cas de reconnaissance d'un comportement neutre, les amortisseurs des roues avant et des roues arrière sont commandés de la même manière sur un amortissement qui va de moyen à élevé.

7. Procédé selon l'une des revendications 1 à 6, **caractérisé en ce qu'**après apparition d'un comportement neutre, un comportement non critique est reconnu **en ce que** la condition $|\dot\psi_{ref}-\dot\psi|<\varepsilon_1$ et $|\ddot\psi_{ref}-\ddot\psi|<\varepsilon_2$ et $|\alpha_y|<\varepsilon_3$ est satisfaite, et **en ce qu'**en cas de reconnaissance d'un comportement non critique, les amortisseurs sont à nouveau commandés dans l'état qui correspond à la stratégie de régulation standard utilisée.

8. Procédé selon l'une des revendications 1 à 7, **caractérisé en ce que** l'amortissement des amortisseurs s'effectue non seulement dans les degrés discrets souple, moyen, dur, mais en continu, le degré d'amortissement dépendant de la situation de conduite respective.

9. Procédé selon l'une des revendications 1 à 8, **caractérisé en ce que** la mesure de l'amortissement réglée en continu dépend de la dynamique de la situation respective, et dans l'appréciation de la dynamique de conduite entre au moins l'embardée et/ou l'accélération d'embardée du véhicule, l'embardée de référence et/ou l'accélération d'embardée de référence ainsi que l'accélération transversale du véhicule.

10. Procédé selon l'une des revendications 1 à 9, **caractérisé en ce que** les valeurs des signaux déterminées pour apprécier la dynamique de conduite sont pondérées au moyen de la vitesse longitudinale du véhicule.

11. Procédé selon l'une des revendications 1 à 10, **caractérisé en ce que** pour apprécier la dynamique de conduite sont utilisés non seulement les signaux de dynamique mesurés ou calculés de manière actuelle en un instant, mais également la variation de ces signaux à l'intérieur d'un intervalle de temps passé ...delta_T..., les valeurs maximales des signaux étant mémorisées et appris par réduction linéaire ou dégressive au cours du temps.

12. Procédé selon les revendications 1 à 11, **caractérisé en ce que** la commande des amortisseurs avec le signal de commande de phase correcte est superposé par addition aux exigences d'autres mécanismes de commande d'amortisseurs (par exemple stratégie de régulation skyhook).

13. Procédé selon les revendications 1 à 12, **caractérisé en ce que** la mesure de la superposition par addition de différentes exigences relatives aux amortisseurs est définie par le degré de la dynamique de conduite atteinte, et **en ce que** dans le cas d'une dynamique élevée, une proportion élevée jusqu'à 100 % est prédéfinie, tandis que pour une dynamique faible seule une petite proportion jusqu'à 0 % est définie et superposée à une proportion équivalente d'une autre stratégie de régulation.

14. Procédé selon l'une des revendications 1 à 13, **caractérisé en ce que** tous les seuils $\varepsilon$ pour déterminer la situation de conduite, sont adaptés aux temps morts survenant lors de la transmission des données entre le régulateur et les organes de réglage (amortisseurs), ainsi qu'aux temporisations des organes de réglage, étant entendu que pour une grande somme des temps morts et des temporisations des seuils plus petits sont utilisés, afin que la réaction de la commutation s'effectue à temps.

15. Régulation ESP **caractérisée par** un procédé selon l'une des revendications 1 à 14.

16. Dispositif de commande et/ou de régulation d'amortisseurs à réglage numérique ou analogique, de préférence dans un véhicule routier à deux essieux, les amortisseurs étant commandés avec un signal de commande, en fonction de la situation, de manière que la conduite du véhicule soit améliorée en cas de sous-virage et de survirage, **caractérisé par** une unité de détermination (200) qui détermine une embardée de référence ($\dot\psi_{ref}$) et l'embardée mesurée effectivement ($\dot\psi$) du véhicule ainsi que les gradients des deux embardées, c'est-à-dire l'accélération d'embardée de référence ($\ddot\psi_{ref}$) et l'accélération effective ($\ddot\psi$) du véhicule, par une autre unité de détermination (230) pour déterminer des situations de conduite avec tendance au roulis, à savoir un comportement de sous-virage pour lequel les conditions $\dot\psi_{ref}<\dot\psi+\varepsilon_1$ et $\ddot\psi_{ref}>\ddot\psi+\varepsilon_2$ ou $\dot\psi_{ref}<\dot\psi-\varepsilon_1$ et $\ddot\psi_{ref}<\ddot\psi-\varepsilon_2$, ou un comportement de survirage, pour lequel les conditions $\ddot\psi_{ref}\leq\ddot\psi$ et $\ddot\psi>\varepsilon_3$ ou $\ddot\psi_{ref}\geq\ddot\psi$ et $\ddot\psi<-\varepsilon_3$ sont satisfaites, et une unité de commande et de régulation (220, 210) qui détermine, en fonction d'au moins des grandeurs décrivant la rotation du véhicule autour de l'axe vertical, un instant auquel une commande correcte des amortisseurs du véhicule est exécutée pour accroître la dirigeabilité en cas de sous-virage et la stabilité en cas de survirage.

17. Dispositif selon la revendication 16, **caractérisé en ce que** l'embardée de référence est déterminée dans un modèle linéaire à une voie, et l'unité de régulation et de commande (220, 210) détermine, en recourant à l'unité de détermination (230), à partir des valeurs d'embardée, des instants de commutation précis entre lesquels les amortisseurs des 4 roues sont commandés durs ou souples progressivement ou en continu.

18. Dispositif selon la revendication 16, **caractérisé en ce que** le concept de régulation fait partie d'une stratégie de régulation ESP et les signaux de la régulation ESP sont inclus dans la régulation et/ou la commande des amortisseurs.

19. Dispositif selon la revendication 16, **caractérisé en ce qu'**il fait partie d'un régulateur ESP.

20. Dispositif selon l'une des revendications 16 à 19, **caractérisé en ce que** l'unité de détermination (230) reconnaît le sous-virage dans une courbe à gauche, **en ce que** la condition $\dot{\psi}_{ref}>+\dot{\psi}\varepsilon_1$ et $\ddot{\psi}_{ref}>\ddot{\psi}+\varepsilon_2$ est satisfaite, et reconnaît le sous-virage dans une courbe à droite **en ce que** la condition $\dot{\psi}_{ref}<\dot{\psi}-\varepsilon_1$ et $\ddot{\psi}_{ref}<\ddot{\psi}-\varepsilon_2$ est satisfaite, et **en ce qu'**en cas de reconnaissance de sous-virage dans l'une quelconque des deux directions, l'unité de détermination (230) produit un signal qui est utilisé pour que les amortisseurs des roues avant soient commandés souples, ceux des roues arrière soient commandés durs.

21. Dispositif selon l'une des revendications 16 à 20, **caractérisé en ce que** l'unité de détermination (230) reconnaît un survirage dans une courbe à gauche, **en ce que** la condition $\dot{\psi}_{ref}\leq\dot{\psi}$ et $\ddot{\psi}>\varepsilon_3$ est satisfaite, et reconnaît un survirage dans une courbe à droite **en ce que** la condition $\dot{\psi}_{ref}\geq\dot{\psi}$ et $\ddot{\psi}<-\varepsilon_3$ est satisfaite, et **en ce qu'**en cas de reconnaissance de survirage dans l'une quelconque des deux directions, l'unité de détermination (230) produit un signal qui est utilisé pour que les amortisseurs des roues avant soient commandés durs, ceux des roues arrière soient commandés souples.

22. Dispositif selon les revendications 16 à 21, **caractérisé en ce que** l'unité de détermination (230) reconnaît un comportement neutre du véhicule lorsqu'après apparition d'un sous-virage, la condition $|\dot{\psi}_{ref}-\dot{\psi}|<\varepsilon_1$ et $|\ddot{\psi}_{ref}-\ddot{\psi}|<\varepsilon_2$ est satisfaite ou après apparition d'un survirage, la condition $-\varepsilon_3\leq\ddot{\psi}\leq\varepsilon_3$ est satisfaite ou après apparition d'un comportement non critique les conditions $|\dot{\psi}_{ref}-\dot{\psi}|\varepsilon_1$ et $|\ddot{\psi}_{ref}-\ddot{\psi}|<\varepsilon_2$ et $|\alpha_y|>\varepsilon_4$ sont satisfaites, et **en ce qu'**en cas de reconnaissance d'un comportement neutre l'unité de détermination (230) produit un signal qui est utilisé pour que les amortisseurs des roues avant et des roues arrière soient commandés dans une même mesure sur un amortissement qui va de moyen à élevé.

23. Dispositif selon l'une des revendications 16 à 22, **caractérisé en ce que** l'unité de détermination (230) reconnaît un comportement non critique après apparition d'un comportement neutre, **en ce que** la condition $|\dot{\psi}_{ref}-\dot{\psi}|<\varepsilon_1$ et $|\ddot{\psi}_{ref}-\ddot{\psi}|<\varepsilon_2$ et $|\alpha_y|<-\varepsilon_5$ est satisfaite, et **en ce qu'**en cas de reconnaissance d'un comportement non critique l'unité de détermination produit un signal qui est utilisé pour que les amortisseurs soient à nouveau commandés dans l'état qui correspond à la stratégie de régulation standard utilisée.

24. Dispositif selon l'une des revendications 16 à 23, **caractérisé en ce que** l'unité de régulation et de commande (220, 210) commande l'amortissement des amortisseurs non seulement dans les degrés discrets souple, moyen, dur, mais en continu, la mesure de l'amortissement dépendant de la situation de conduite respective.

25. Dispositif selon l'une des revendications 16 à 24, **caractérisé en ce que** l'unité de commande et de régulation (220, 210) détermine la mesure de l'amortissement réglé en continu en fonction de la dynamique de la situation respective, l'embardée et/ou l'accélération d'embardée du véhicule, l'embardée de référence et/ou l'accélération d'embardée de référence ainsi que l'accélération transversale du véhicule étant utilisées comme signaux significatifs pour apprécier la dynamique de conduite.

26. Dispositif selon l'une des revendications 16 à 25, **caractérisé en ce que** les valeurs des signaux utilisés pour apprécier la dynamique de conduite sont pondérées au moyen de la vitesse longitudinale du véhicule.

27. Dispositif selon l'une des revendications 16 à 26, **caractérisé en ce que** pour apprécier la dynamique de conduite sont utilisés non seulement les signaux de dynamique mesurés ou calculés de manière actuelle à un instant, mais également la variation de ces signaux à l'intérieur d'un intervalle de temps passé ...delta_T..., les valeurs maximales des signaux étant mémorisées et apprises par réduction linéaire ou dégressive au cours du temps.

28. Dispositif selon l'une des revendications 16 à 27, **caractérisé en ce que** la commande des amortisseurs est superposée par addition aux exigences d'autres mécanismes de commande d'amortisseur (par exemple stratégie de régulation skyhook).

**29.** Dispositif selon l'une des revendications 16 à 28, **caractérisé en ce que** la mesure de la superposition par addition de différentes exigences relatives aux amortisseurs est définie par le degré de la dynamique de conduite atteinte, et **en ce que** dans le cas d'une dynamique élevée, une proportion élevée jusqu'à 100 % est prédéfinie, tandis que pour une dynamique faible seule une petite proportion jusqu'à 0 % est définie et superposée à une proportion équivalente d'une autre stratégie de régulation.

**30.** Dispositif selon l'une des revendications 16 à 29, **caractérisé en ce que** tous les seuils pour déterminer la situation de conduite, sont adaptés aux temps morts survenant lors de la transmission des données entre le régulateur et les organes de réglage (amortisseurs), ainsi qu'aux temporisations des organes de réglage, étant entendu que pour une grande somme des temps morts et des temporisations des seuils plus petits sont utilisés, afin que la réaction de la commutation s'effectue à temps.

Fig. 1

Fig. 2

Fig. 3

Gierraten

Dämpfereinstellung

weich

neutral

hart

EP 1 536 957 B1

Fig. 4

Gierraten

82 · 81 ∿ · ∿ 80

71
72

94 ∿ · 74

95 ∿ · 78

0 · t

73 ∿ · ∿ 75

76 ∿ · ∿ 79

77

Dämpfer-einstellung

91 · weich

89

92 · neutral

90

93 · hart

t

25

EP 1 536 957 B1

EP 1 536 957 B1

Fig. 5

**Fig. 6**

Fahrzeugparameter:
$I, I_v, I_h, c_v, c_h, m$ — 208

$a_y, \delta, v, \dot{\psi}$

201

$\dot{\psi}_{Ref}, \ddot{\psi}_{Ref}, \ddot{\psi}$

Signal-aufbereitung — 200

203

$\dot{\psi}, a_y$

Zustands-automat zur Situations-erkennung — 230

U/O, Neutral

205 — 204

Aktiv

$\ddot{\psi}, \ddot{\psi}_{Ref}$

$v, a_y$

Dynamikbeurteilung über Kennlinien und Zeitsteuerung $\lambda' = f(x_i)$ — 220

$\lambda$

206

Strom-Grundwerte:
$I_{max}, I_{min}, I_{neutral}$

209

Überlagerungs-einrichtung — 210

Überlagerungsstrom $I(4)$ — 207

Stromanforderung / Skyhook: $I_{skyhook}(4)$

202

EP 1 536 957 B1

**Fig. 7**

Fig. 8

$I_{vl\_skyhook}$ — 350

$I_{vr\_skyhook}$ — 351

$I_{hl\_skyhook}$ — 352

$I_{hr\_skyhook}$ — 353

Neutral — 354

U/O — 355

$I_{max}$ 360
$I_{min}$ 361
320

$I_{min}$ 362
$I_{max}$ 363
321

365
$I_{neutral}$ 366
325

367
$I_{neutral}$ 368
326

370
371
330 375
331

$\lambda$ — 356

$1-\lambda$ 340

300 380
310
$I_{vl\_esp}$
390 $I_{vl}$

301 381
311
$I_{vr\_esp}$
391 $I_{vr}$

302 382
312
$I_{hl\_esp}$
392 $I_{hl}$

303 383
313
$I_{hr\_esp}$
393 $I_{hr}$

376
377

$1-\lambda$

EP 1 536 957 B1

29

Fig. 9

EP 1 536 957 B1

Fig. 10